# EUROPEAN PATENT SPECIFICATION

(11) **EP 4 514 877 B1**
(45) Date of publication and mention of the grant of the patent: **04.03.2026**
(21) Application number: 23721343.4
(22) Date of filing: 20.04.2023
(51) Int. Cl.: C08G 64/06, C08G 64/18, C08G 64/30

(54) **POLYCARBONATE COCONDENSATE WITH PHENOLIC BUILDING BLOCKS**
POLYCARBONATKOKONDENSAT MIT PHENOLBAUBLÖCKEN
COCONDENSAT DE POLYCARBONATE AVEC DES BLOCS DE CONSTRUCTION PHÉNOLIQUES

(30) Priority: 27.04.2022 EP 22170242
(43) Date of publication of application: 05.03.2025
(73) Proprietor: Covestro Deutschland AG, 51373 Leverkusen (DE)
(72) Inventor: GARSKA, Bernd, 51103 Köln (DE); HEIJL, Jan, 9940 Evergem (BE); BERTIN, Annabelle, 2020 Antwerpen (BE); MEINE, Niklas, 40223 Düsseldorf (DE)
(74) Representative: Levpat
(86) International application number: PCT/EP2023/060294
(87) International publication number: WO 2023/208724

(56) References cited:
- WO-A2-2015/168225
- US-B2- 8 247 619

## Description

The present invention relates to a polycarbonate cocondensate comprising specific phenolic building blocks and another phenolic building block different from the first one, a molding compound comprising said polycarbonate cocondensate, a molded article comprising said polycarbonate condensate, a process for preparing a polycarbonate cocondensate comprising specific phenolic building blocks and another phenolic building block different from the first one and the use of a specific homopolycarbonate for preparing polycarbonate cocondensates comprising a specific phenolic building block.

Polycarbonates, especially aromatic polycarbonates, are known to exhibit a good property profile with respect to mechanical and optical properties, heat resistance and weatherability. Due to this property profile they are used in various indoor and outdoor applications. Typically polycarbonates are prepared by the interphase phosgenation process or the melt transesterification method.

Lignocellulosic biomass has been acknowledged for potential use to produce chemicals and biomaterials. It comprises cellulose, hemicellulose and lignin. Lignin is a highly cross-linked macromolecule composed of different types of substituted phenols. Respective processing of lignin can provide various bisphenols and as such lignin promises to be a potential substitute for petrochemically used compounds, but based on natural and renewable sources at affordable costs.

Some studies have been already performed focusing on the provision of bisphenols from lignin. For example, WO2019/002503A1 describes a process for producing ortho alkoxy bisphenols which may be used as starting products for the preparation of biopolymers. This document mentions the reaction of those bisphenol compounds with phosgene or diaryl carbonates to a polycarbonate. However, in the experimental part no such reaction has been conducted.

WO2018/134427 A1 relates to the production of highly pure meta,meta-coupled bis(4-alkylphenol) derivatives from lignin derived sources. The resulting bisphenols are said to be useful monomers for the production of polycarbonates using inter alia phosgene or diphenyl carbonate. However, also in this document no polycarbonate is prepared.

In Green Chem., 2017, 19, 2561-2570 a polycarbonate is synthesized using m,m'-bis(4-alkylguaiacol) and triphosgene via a standard lab scale procedure. The resulting molecular weights given in this paper indicate that the reaction was not complete.

In CN105461912 A the reaction of specific bisphenols with triphosgene is described, too.

WO2015/183892A1 describes the synthesis of new reactive functionalized phenolic building blocks. In example 46 the synthesis of bisguaiacol polycarbonates is described. Bisguaiacol F is reacted with nitrochloroformate in acetonitrile.

WO2015/168225A2 describes the reaction of alkoxy bisphenols to polycarbonates by interphase phosgenation. In example 5 of this document a polycarbonate based on 4,4'-(2,2'-isopropylidene-bis(o-methoxy)phenol (PBMP) is prepared using the interphase phosgenation and p-cumylphenol as endcapping agent. This document mentions the copolymerization of alkoxy bisphenols with additional monomers that exhibit a half maximal inhibitory concentration (IC₅₀) of less than 0.00025M for alpha or beta in vitro estradiol receptors.

From the prior art as cited above, it can be seen that the skilled person knows how to prepare specific bisphenols from lignin. In the examples of those documents clear instructions as to the fact how to prepare these bisphenols can be found. Those examples are incorporated herein by reference for the sake of the provision of the bisphenols from lignin. Especially, Green Chem., 2018, 20, 1050-1058 shows how to prepare 5,5'-methylenebis(4-n-propylguaiacol).

Polycarbonate cocondensates are complex systems: by using different comonomers the resulting properties of a cocondensate can be fine-tuned, especially with respect to mechanical properties, glass transition temperatures, optical properties, flame retardancy and the like. However, the copolymerization is not always easy for example for reasons of compatibility and/or reactivity of the different comonomers.

Based on this prior art, there is a need to provide and prepare a polycarbonate cocondensate at least partially based on natural and renewable resources. Moreover, there is a need to provide a polycarbonate cocondensate which can be prepared in industrial scale. This polycarbonate cocondensate should have tunable properties due to the fact that it is a cocondensate of at least two different structural units. Additionally, this polycarbonate should exhibit comparable properties (e. g. with respect to processing, mechanical and optical properties, especially yellowing) to the standard bisphenol A based polycarbonate cocondensates on the market. Finally, an efficient, economically and ecologically advantageous process for preparing such polycarbonate condensates is needed.

At least one of the above-mentioned objects, preferably all of these objects have been solved by the present invention.

It was found that the copolymerization of a bisphenol from lignin with for example a monomeric bisphenol A did not give the freedom to fine-tune all properties of the resulting cocondensate, because the higher the content of the bisphenol from lignin (in the following also BPL) in such a polycarbonate cocondensate the lower the molecular weight. However, the molecular weight of a polycarbonate cocondensate is an important criteria for certain applications, the resulting mechanical properties etc. At the same time a high amount of BPL in the polycondensate is beneficial, because this comonomer is based on natural and renewable resources. A high amount of renewable raw material is highly desirable. Renewable raw materials are also known to have a lower carbon footprint than fossil based ones.

Surprisingly, the inventors found that when using a homopolycarbonate and not a monomer together with a bisphenol from lignin, high molecular weights of the resulting cocondensates could be obtained only when at least 20 mol.-% of the bisphenol of lignin is used. Such molecular weights are reasonable in the sense that the cocondensate of the present invention has a molecular weight which is high enough to ensure good mechanical properties, preferable comparable mechanical properties when compared to a polycarbonate based on bisphenol A having a comparable molecular weight. Moreover preferably, the cocondensate of the present invention exhibits comparable properties (e. g. with respect to processing, mechanical and/or optical properties) to the standard bisphenol A based polycarbonate cocondensates on the market. Furthermore, polycarbonate cocondensates having such reasonable molecular weights and at the same time comprising a high amount of the bisphenol from lignin are accessible. This means that the polycarbonate cocondensate of the present invention can at least partially, preferably to a high amount be based on natural and renewable bisphenols. Finally, polycarbonate cocondensates can be obtained having high glass transition temperatures. This glass transition temperature ensures that the polycarbonate cocondensate of the present invention is useful for all applications for which also BPA based polycarbonates are used. Preferably, the glass transition temperature can be determined by differential scanning calorimetry ISO 11357-2:2013-05 at a heating rate of 10°C/min.

Accordingly, the present invention provides a polycarbonate cocondensate comprising at least one structural unit (A) and at least one structural unit (B) 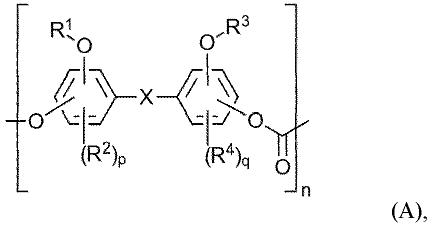 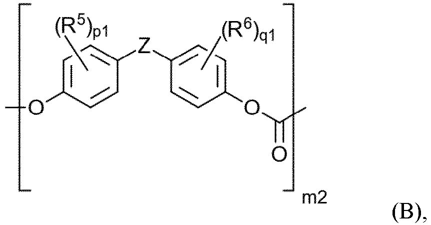 wherein
each X in structural unit (A) independently represents a single bond, -O-, -S-, -S(O)-, -S(O)₂-, -C(O)-, or an organic group having 1 to 18 carbon atoms, wherein the organic group having 1 to 18 carbon atoms can be linear, branched or cyclic, aromatic or non-aromatic, and can further comprise heteroatoms such as halogens, oxygen, nitrogen, sulfur, silicon or phosphorous,
each of R¹ and R³ independently represents a monovalent hydrocarbon group, preferably C₁-C₂₆-alkyl, C₇-C₂₆ alkylaryl or C₇-C₂₆-aralkyl,
each of R² and R⁴ independently represents a hydrogen atom, an alkoxy group, or a monovalent hydrocarbon group, preferably a hydrogen atom, C₁-C₆-alkoxy or C₁-C₆-alkyl, and

each of p and q independently is 1 or 2, preferably 1 and
n represents the average number of repeating units, wherein n is 1 to 10, preferably 1 to 6 and more preferably 1 to 4,
   wherein each Z in structural unit (B) independently represents a single bond, -S(=O)₂-, - C(=O)-, -O-, -S-, -S(=O)-, -CH(CN)-, linear or branched C₁-C₆-alkylene which optionally comprises at least one carbonyl-group, optionally comprises at least one halogen atom and/or optionally is interrupted by at least one heteroatom, C₂-C₁₀-alkylidene which optionally comprises at least one carbon-carbon-double bond, optionally comprises at least one carbonyl-group and/or optionally comprises at least one halogen atom, C₅-C₁₂-cycloalkylene, wherein the cycloaliphatic group is fused to at least one further cycloaliphatic ring, C₅-C₁₅-cycloalkylidene wherein the cycloaliphatic group is optionally fused to at least one cycloaliphatic and /or at least one aromatic ring, C₇-C₂₀-aralkylidene, C₈-C₂₀-aralkylene, C₆-C₁₂-arylene optionally being fused to further aromatic rings which optionally may comprise at least one hetero atom, formula (B1-A), formula (B1-B), formula (B1-C) or formula (B1-D) 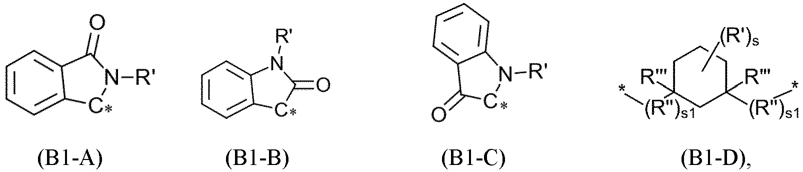
   wherein in formulae (B1-A), (B1-B) and (B1-C) each R' independently represents a linear C₁-C₄-alkyl, branched C₃-C₄-alkyl, aralkyl or aryl and the "C*" indicates the quaternary carbon atom which is at the position indicated as "Z" in formula (B), and
   wherein in formula (B1-D) each R' independently represents a linear C₁-C₄-alkyl, branched C₃-C₄-alkyl, each R" independently represents a linear C₁-C₄-alkylene, branched C₃-C₄-alkylene, each R‴ independently represents H or linear C₁-C₃-alkyl, s is 0 to 2 and each s1 independently is 0 or 1, and the "*" indicate the bonds which link "Z" to the aromatic rings in formula (B),
   each R⁵ and R⁶ independently represents H, C₁-C₁₈-alkyl, C₅-C₆-cycloalkyl, C₁-C₅-alkenyl-, C₁-C₁₈-alkoxy, phenoxy, halogen atom, C₆-C₁₈-aryl or C₇-C₁₈-aralkyl,
   each of p1 and q1 is 1 to 4 and
   m2 represents the average number of repeating units, and m2 is 7 to 31,
wherein the molar ratio of structural unit (A) to structural unit (B) is from 20:80 to 95:5
and the polycarbonate cocondensate has a weight average molecular weight of 15 000 g/mol to 50 000 g/mol, preferably 17 000 g/mol to 40 000 g/mol and more preferably 20 000 g/mol to 35 000 g/mol as determined by GPC in dichloromethane using a BPA-based polycarbonate calibration.

The skilled person understands that there might be an overlap between the structure of chemical formula (A) and (B). However, according to the present invention the term "polycarbonate cocondensate" preferably is to be understood that the structure of formula (A) needs to be mandatorily different than the structure of formula (B). Only by this a polycarbonate cocondensate comprising two different structural units results. Thus, preferably the structure of chemical formula (A) is different from the structure of chemical unit (B).

Preferably, the polycarbonate cocondensate of the present invention is a polycarbonate block cocondensate. Preferably, this means that at least the structural unit which are represented by formula (B) are blocks in the sense that m2 is 7 to 31, preferably 10 to 29, more preferably 15 to 28, most preferably 19 to 27. These numbers are to be understood as average number of repeating units of one block of structural formula (B). The polycarbonate cocondensate can comprise polymer chains having one or more than one block of structural formula (B).

In the same way the polycarbonate cocondensate of the present invention comprises structural units (A) wherein n represents the average number of repeating units, wherein n is 1 to 10, preferably 1 to 6 and more preferably 1 to 4. This number is to be understood that one structural unit (A) comprises such average number of repeating units. The polycarbonate cocondensate can and most likely will have more than one structural unit (A). Each structural unit (A) in one polycarbonate cocondensate chain has an individual average number of repeating units n, wherein n is 1 to 10, preferably 1 to 6 and more preferably 1 to 4.

The polycarbonate cocondensate of the present invention may be linear or branched depending on the type of monomers used in the process of the present invention.

Preferably, the polycarbonate cocondensate of the present invention is obtained by melt transesterification. More preferably, the polycarbonate of the present invention is obtained by using the process of the present invention (as described below).

Preferably, the polycarbonate cocondensate according to the present invention is at least partially bio-based. For the purposes of the present invention, the expression "bio-based" is understood as meaning that the relevant chemical compound is at the filing date available and/or obtainable *via* a renewable and/or sustainable raw material. A renewable and/or sustainable raw material is preferably understood as meaning a raw material that is regenerated by natural processes at a rate that is comparable to its rate of depletion (see CEN/TS 16295:2012). The expression is used in particular to distinguish it from raw materials produced from fossil raw materials, also referred to in accordance with the invention as fossil-based. As an example, most bisphenol A based polycarbonates represents commonly known fossil-based polycarbonates. Whether a raw material is bio-based or fossil-based can be determined by the measurement of carbon isotopes in the raw material, since the relative amounts of the carbon isotope C¹⁴ are lower in fossil raw materials. This can be done, for example, in accordance with ASTM D6866-18 (2018) or ISO16620-1 to -5 (2015) or DIN SPEC 91236 2011-07. Exemplary bio-based materials are bisphenols as obtained from lignin.

"Alkyl" in the context of the present invention, for example and if not mentioned differently, refers to an alkane structure of which one hydrogen atom is removed. The "alkyl" of the present invention which can be linear or branched is saturated and therefore, it comprises only single bonds between adjacent carbon atoms. Preferably, alkyl groups according to the present invention comprise methyl, ethyl, n-propyl, isopropyl, n-butyl, sec-butyl, tert-butyl, n-pentyl, 1-methylbutyl, 2-methylbutyl, 3-methylbutyl, neopentyl, 1-ethylpropyl, n-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl and the like. These structures can be limited in choice, in case the invention defines the carbon atoms of an alkyl group in a different manner.

"Alkylene" in the context of the present invention, for example and if not mentioned differently, refers to a bridging alkane structure of which two hydrogen atoms from different carbon atoms are removed. In this context the two carbon atoms of which the two hydrogens atoms are removed can be removed from any carbon atom which is present in the alkane structure. This means that the two carbon atoms can, but not necessarily must be, adjacent to each other. An alkylene structure can be linear or branched and is saturated. In case the alkylene group comprises only one carbon atom, the alkylene group is a methylene group (-CH₂-) which is connected to the rest of the molecule by two single bonds. Preferably, alkylene groups according to the present invention comprise methylene, ethylene, n-propylene, isopropylene, n-butylene, sec-butylene, tert-butylene, n-pentylene, 1-methylbutylene, 2-methylbutylene, 3-methylbutylene, neopentylene, 1-ethylpropylene, n-hexylene, 1,1-dimethylpropylene, 1,2-dimethylpropylene, 1,2-dimethylpropylene, 1-methylpentylene, 2-methylpentylene, 3-methylpentylne, 4-methylpentylene, 1,1-dimethylbutylene, 1,2-dimethylbutylene, 1,3-dimethylbutylene, 2,2-dimethylbutylene, 2,3-dimethylbutylene, 3,3-dimethylbutylene, 1-ethylbutylene, 2-ethylbutylene, 1,1,2-trimethylpropylene, 1,2,2-trimethylpropylene, 1-ethyl-1-methylpropylene, 1-ethyl-2-methylpropylene, 1-ethyl-2-methylpropylene and the like. These structures can be limited in choice, in case the invention defines the carbon atoms of an alkylene group in a different manner. Moreover, the alkylene group according to the present invention optionally comprises at least one carbonyl-group, optionally comprises at least one halogen atom and/or optionally is interrupted by at least one heteroatom. Examples for such alkylene groups are -C(=O)-(CH₂)₄-C(=O)-, -C(=O)-(CH₂)₃-C(=O)-, -C(=O)-(CH₂)₂-C(=O)-, -C(CF₃)₂, -O-(CH₂)₄-O-, -O-(CH₂)₃-O-, -O-(CH₂)₂-O- or the like.

"Alkylidene" in the context of the present invention, for example and if not mentioned differently, refers to a bridging alkane structure of which two hydrogen atoms from the same carbon atom are removed. The alkylidene group optionally comprises at least one carbon-carbon-double bond, optionally comprises at least one carbonyl-group and/or optionally comprises at least one halogen atom. Preferably, alkylidene groups according to the present invention and/or in context with formula (B) comprise CH₂=C*, C(CH₃)₂=C*, isopropylidene, n-propylidene, iso-heptylidene, C*(CH₃)(C(=O)CH₃), C(Cl₂)=C*, C(Br₂)=C* or the like, wherein the "C*" indicates the carbon atom which is at the position indicated as "Z" in formula (B).

"Cycloalkylene" in the context of the present invention, for example and if not mentioned differently, refers to a bridging cycloalkane structure of which two hydrogen atoms from different carbon atoms in the ring are removed. In this context the two carbon atoms of which the two hydrogens atoms are removed can be removed from any carbon atom which is present in the cycloalkane structure. This means that the two carbon atoms can, but not necessarily must be, adjacent to each other. According to the present invention the cycloaliphatic group of the cycloalkylene group is fused to at least one further cycloaliphatic ring. Examples of such a cycloalkylene group is the adamantanylene (tricyclo [3.3. 1.1 3,7 ] decanediyl).

"Cycloalkylidene" in the context of the present invention, for example and if not mentioned differently, refers to a bridging cycloalkane structure of which two hydrogen atoms from the same carbon atom in the ring are removed. The cycloaliphatic group of the cycloalkylidene group is optionally fused to at least cycloaliphatic and /or at least one aromatic ring. Examples of such cycloalkylidene groups are cyclopentylidene, cyclohexylidene, 3,3,5-trimethylcyclohexylidene, cyclodecylidene, cyclododecylidene, tetrahydrodicyclopentylidene, 9-fluorenylidene or the like.

"Aralkylidene" in the context of the present invention, for example and if not mentioned differently, refers in each case independently to a bridging straight-chain, cyclic, branched or unbranched alkyl structure of which two hydrogen atoms from the same carbon atom are removed and which is singly, multiply or polysubstituted by aryl radicals. In parallel, "aralkylene" refers in each case independently to a bridging straight-chain, cyclic, branched or unbranched alkyl structure of which two hydrogen atoms from the different carbon atoms are removed and which is singly, multiply or polysubstituted by aryl radicals. "Aryl" in the context of the present invention, for example and if not mentioned differently, is a carbocyclic aromatic radical. Examples of "aryl" are phenyl, o-, p-, m-tolyl, naphthyl, phenanthryl or anthracenyl. Examples of such aralkylidene groups especially in the context of formula (B) are phenyl-CH*, phenyl-C*(CH₃), naphthyl-CH*, phenyl-C*-phenyl or the like, wherein the "C*" indicates the carbon atom which is at the position indicated as "Z" in formula (B). Examples of such aralkylene groups are m-diisopropylidene phenylene, p-diisopropylidene phenylene.

"Arylalkyl" in the context of the present invention, for example and if not mentioned differently, can be an aryl group as defined above having an alkyl, alkynyl, or alkenyl group attached to the aromatic group.

"Alkoxy" in the context of the invention, for example and if not mentioned differently, refers to a linear, cyclic or branched alkyl group singularly bonded to oxygen (-OR). Preferably, alkoxy groups according to the present invention have 1 to 6 carbon atoms and, thus, comprise methoxy, ethoxy, *n*-propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n*-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy. These structures can be limited in choice, in case the invention defines the carbon atoms of an alkoxy group in a different manner.

A "halogen atom" in the context of the invention, if not mentioned differently, refers to fluorine (F), chlorine (Cl), bromine (Br), or iodine (I). Preferably, a halogen atom is F, Cl, Br or I, more preferably it is Cl or Br.

Based on the above-given definitions the skilled person knows how to understand further definitions which are not explicitly defined in the passage above. The above enumerations should be understood by way of example and not as a limitation.

The term "average number of repeating units" is known by the skilled person. The skilled person knows how to determine this parameter. Typically, it is determined by using a GPC method. Preferably, it is determined using the GPC method as outlined in the context of the present invention.

Preferably, in structural unit (A)
each X independently represents a substituted or unsubstituted C₃-C₁₈-cycloalkylidene; a C₁-C₁₈-alkylidene of the formula -C(R^{c})(R^{d})- wherein R^{c} and R^{d} are each independently hydrogen, C₁-C₁₂-alkyl, C₁-C₁₂-cycloalkyl, C₇-C₁₂-arylalkyl, C₁-C₁₂-heteroalkyl, or cyclic C₇-C₁₂-heteroarylalkyl; or a group of the formula -C(=R^{c})- wherein R^{c} is a divalent C₁ -C₁₂-hydrocarbon group,
each of R¹ and R³ independently represents C₁-C₂₆-alkyl, C₇-C₂₆ alkylaryl or C₇-C₂₆-aralkyl,
each of R² and R⁴ independently represents a hydrogen atom, C₁-C₆-alkoxy or C₁-C₆-alkyl, and
each of p and q independently is 1 and n represents the average number of repeating units.

Preferably, the polycarbonate cocondensate is characterized in that structural unit (A) is represented by the following structural unit (Aa): 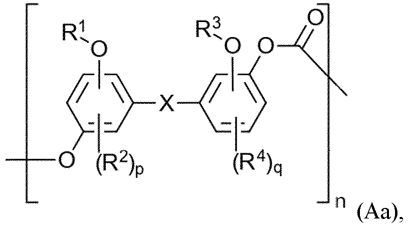 wherein X, R¹, R², R³, R⁴, p, q and n have the meaning as given with respect to structural unit (A).

Preferably, X in structural unit (A) or (Aa) can be a substituted or unsubstituted C₃-C₁₈-cycloalkylidene; a C₁-C₁₈-alkylidene of the formula -C(R^{c})(R^{d})- wherein R^{c} and R^{d} are each independently hydrogen, C₁-C₁₂-alkyl, C₁-C₁₂-cycloalkyl, C₇-C₁₂-arylalkyl, C₁-C₁₂-heteroalkyl, or cyclic C₇-C₁₂-heteroarylalkyl; or a group of the formula -C(=R^{c})- wherein R^{c} is a divalent C₁ -C₁₂-hydrocarbon group. Still preferably, each of R¹ and R³ independently represents C₁-C₂₆-alkyl, C₇-C₂₆ alkylaryl or C₇-C₂₆-aralkyl. Even more preferably each of R¹ and R³ independently represents methyl, ethyl, propyl, octyl, isooctyl, benzyl, ethylphenyl, butylphenyl, propyldiphenyl, or cyclohexylphenyl. Most preferably, each of R¹ and R³ is methyl.

Preferably, X in structural unit (A) or (Aa) represents methylene, cyclohexyl-methylene, 2-[2.2.1]- bicycloheptylidene, ethylidene, isopropylidene, neopentylidene, cyclohexylidene, cyclopentadecylidene, cyclododecylidene, or adamantylidene. Still preferably, X represents a C₁-C₁₈-alkylidene of the formula -C(R^{c})(R^{d})- wherein R^{c} and R^{d} are each independently hydrogen, C₁-C₁₂-alkyl, C₁-C₁₂-cycloalkyl, C₇-C₁₂-arylalkyl, C₁-C₁₂-heteroalkyl, or cyclic C₇-C₁₂-heteroarylalkyl, preferably hydrogen or C₁-C₁₂-alkyl. Still more preferably, R^{c} and R^{d} are each independently hydrogen or C₁-C₆ alkyl. Most preferably, R^{c} is hydrogen and R^{d} is methyl, ethyl, propyl or butyl. At the same time, most preferably each of R¹ and R³ is methyl.

Preferably, each of R² and R⁴ in structural unit (A) or (Aa) independently represents a hydrogen atom, an alkoxy group, or a monovalent hydrocarbon group, preferably a hydrogen atom, C₁-C₆-alkoxy or C₁-C₆-alkyl, even more preferably a hydrogen atom or C₁-C₄-alkyl.

Preferably each of p and q in structural unit (A) or (Aa) is 1. In this case it is most preferred that R² and R⁴ are both C₁-C₄-alkyl.

Preferably, each X in structural unit (A) or (Aa) independently represents a C₁-C₆-alkylidene of the formula -C(R^{c})(R^{d})- wherein R^{c} and R^{d} are each independently hydrogen or C₁-C₅-alkyl.

Still preferably, in structural unit (A) or (Aa) each X independently represents a C₁-C₄-alkylidene of the formula -C(R^{c})(R^{d})- wherein R^{c} and R^{d} are each independently hydrogen or C₁-C₃-alkyl, preferably hydrogen
each of R¹ and R³ independently represents methyl or ethyl,
each of R² and R⁴ independently represents a hydrogen atom, methyl, ethyl or propyl.

Preferably, Z in structural unit (B) independently represents a single bond, -S(=O)₂-, -C(=O)-, -O-, -S-, -S(=O)-, linear or branched C₁-C₆-alkylene, C₂-C₁₀-alkylidene which optionally comprises at least one carbon-carbon-double bond, C₅-C₁₅-cycloalkylidene wherein the cycloaliphatic group is optionally fused to at least cycloaliphatic and /or at least one aromatic ring, C₇-C₁₅-aralkylidene, the C₈-C₁₅-aralkylene of formula (B1-E) 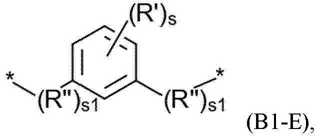
wherein in formula (B1-E) each R' independently represents a linear C₁-C₄-alkyl, branched C₃-C₄ alkyl, each R" independently represents a linear C₁-C₄-alkylene, branched C₃-C₄ alkyl, s is 0 to 2 and each s1 independently is 0 or 1, and the "*" indicate the bonds which link "Z" to the aromatic rings in formula (3),
formula (B1-A), formula (B1-B), formula (B1-C),
each R⁵ and R⁶ independently represents H, C₁-C₁₈-alkyl, C₅-C₆-cycloalkyl, C₁-C₁₈-alkoxy, phenoxy, C₆-C₁₈-aryl or C₇-C₁₈-aralkyl,
each of p1 and q1 is 1 to 4 and m2 represents the average number of repeating units.

independently represents a single bond, C₂-C₅-alkylidene or C₅-C₁₂-cycloalkylidene, preferably a single bond, isopropylidene or 3,3,5-trimethylcyclohexylidene.

Still preferably, Z in formula (B) independently represents a single bond, C₂-C₆-alkylidene, C₅-C₁₂-cycloalkylidene wherein the cycloaliphatic group is optionally fused to at least one aromatic ring, formula (B1-A), formula (B1-B), formula (B1-C), each R⁵ and R⁶ independently represents H, C₁-C₃-alkyl, C₁-C₁₈-alkoxy,each of p1 and q1 is 1 to 4 and m2 represents the average number of repeating units.

Still more preferably, structural unit (B) is represented by a structural unit selected from the group of structural units of formula (3a) to (3k) 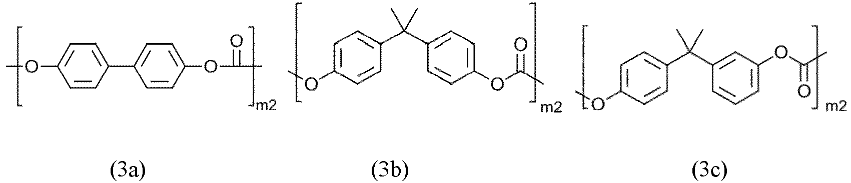 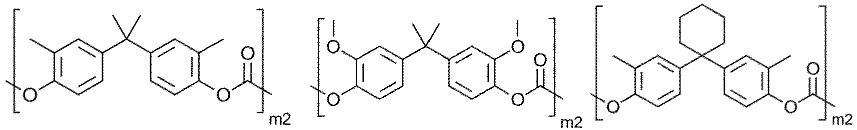 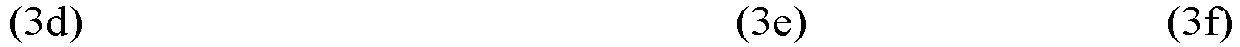 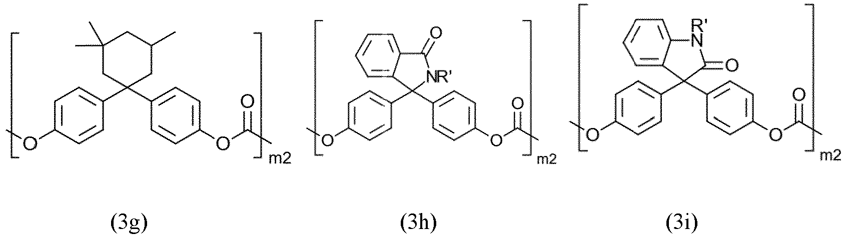 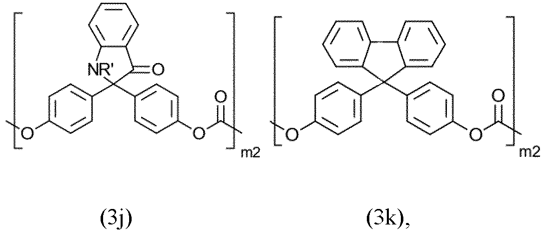 wherein in formulae (3h), (3i) and (3j) R' represents methyl or phenyl.

Most preferably, the polycarbonate cocondensate of the present invention is characterized in that structural unit (B) is represented by the following structural unit (Ba) 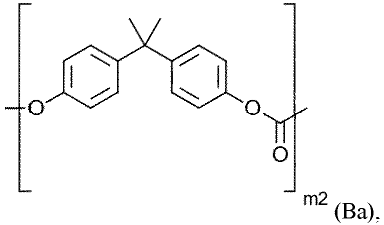 wherein m2 represents the average number of repeating units and is 7 to 31.

Preferably, when structural unit (B) is represented by structural unit (Ba), structural unit (A) is represented by structural unit (Aa).

Structural units (A) and (B) or (Aa) and (Ba) recite "n" and "m2" as number of repeating units. Preferably, the average sum of all ns and all m2s in one polymer chain of the polycarbonate cocondensate of the present invention is 30 to 80, more preferably it is 35 to 75, even more preferably it is 40 to 70, still more preferably it is 45 to 65 and most preferably it is 50 to 60.

This does not mean that such a polycarbonate cocondensate cannot comprise any terminal groups or any other structures which are due to impurities or the like. However, such a polycarbonate cocondensate essentially consist of structures of formula (A) and (B) and furthermore, only one type of repeating unit of structural unit (A) and (B). The skilled person is able to transfer this average sum of n and m2 to a number average molecular weight. Thus, the skilled person is also able to calculate n and m2 based on the molecular weight and the ratio of structural unit (A) and (B).

Preferably, the polycarbonate cocondensate of the present invention does not comprise a structural unit of formula (100) 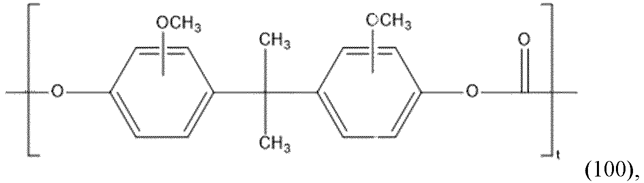 wherein t represents the number of repeating units and is preferably 1 to 80, more preferably it is 2 to 75, even more preferably it is 40 to 70, still more preferably it is 45 to 65 and most preferably it is 50 to 60. This however, does preferably not exclude that the structural unit of formula (100) might be present in the polycarbonate cocondensate of the present invention in trace amounts. Preferably, the amount of structural unit of formula (100) in the polycarbonate cocondensate of the present invention is less than 30 wt.-%, still preferably less than 20 wt.-%, most preferably less than 10 wt.%, wherein the wt.-% is based on the total weight of the polycarbonate cocondensate.

According to the present invention, the polycarbonate cocondensate has a weight average molecular weight of 15 000 g/mol to 50 000 g/mol, preferably 17 000 g/mol to 40 000 g/mol and more preferably 20 000 g/mol to 35 000 g/mol as determined via gel permeation chromatography in dichloromethane using a bisphenol A-polycarbonate calibration. Preferably, this gel permeation chromatography is calibrated using a bisphenol A polycarbonate and dichloromethane as eluent. Typically, linear polycarbonate (obtained from BPA and phosgene) having a known molecular weight distribution of PSS Polymer Standards Service GmbH, Deutschland can be used for the calibration. Most preferably, the calibration is performed according to method 2301-0257502-09D method (from 2009 in German) from the company Currenta GmbH & Co. OHG, Leverkusen. The eluent is dichloromethane.

Preferably, a combination of columns based on crosslinked styrene divinylbenzene resins is used. Still preferably, the diameter of the analytical columns is 7,5 mm, length of 300 mm. The particle size of the column material is preferably 3 µm to 20 µm. The concentration of the solution is preferably 0.2 wt.-%. The flow rate is preferably 1.0 ml/min. The temperature of the solution is preferably 30 °C. Preferably, a UV- and/or RI-detection is used.

The weight average molecular weight as defined according to the present invention ensures that the resulting polycarbonate cocondensate exhibits good mechanical properties in terms of tensile strength and processing parameters. It has been surprisingly found that the resulting tensile strength is comparable to the tensile strength of bisphenol A based polycarbonate having a comparable number average molecular weight.

In particular the polycarbonate condensate of the present invention has a glass transition temperature above 100 °C, preferably above 110 °C, more preferably above 116 °C, still more preferably above 125 °C and most preferably above 130 °C. This glass transition temperature ensures that the polycarbonate cocondensate of the present invention is useful for all applications for which also BPA based polycarbonates are used. Preferably, the glass transition temperature can be determined by differential scanning calorimetry ISO 11357-2:2013-05 at a heating rate of 10 °C/min.

The polycarbonate cocondensate has a molar ratio of structural unit (A) to structural unit (B) from 20:80 to 95:5, preferably from 25:75 to 93:7, more preferably from 30:70 to 92:8, still more preferably from 35:65 to 91:9, and most preferably from 39:61 to 90:10. Preferably, the molar ratio of structural unit (A) and (B) can be determined by total hydrolysis. Preferably, the respective polycarbonate cocondensate is subjected to a total hydrolysis to form the corresponding degradation products which are the corresponding monomeric structural units (A) and (B). The ratio of those degradation products can be determined by ¹H-NMR or HPLC (the latter may be accomplished for example as follows: The polycarbonate cocondensate sample is hydrolyzed under reflux by means of sodium methoxide. The corresponding solution is acidified and concentrated to dryness. The drying residue is dissolved in acetonitrile and the phenolic compounds are determined by means of HPLC with UV detection. In the prior art no such polycarbonate cocondensates having a high content of structural unit (A) are available. Moreover, if high molecular weights with a monomeric structure (B) (m2 around 1) were obtained in the prior art, these polycarbonates exhibited disadvantageous optical properties. This is mainly due to the high terminal chlorine content.

According to the present invention, it is possible to fine-tune the resulting properties by choosing the molar ratio of structural units (A) and (B). However, for the sake of a polycarbonate cocondensate having a high content of bio-based structural units, it is preferred to have a high content of structural units (A).

Preferably, the polycarbonate cocondensate of the present invention comprises at least 30 wt.-%, more preferably at least 60 wt.-%, still more preferably at least 80 wt.-% and most preferably at least 90 wt.-% of the sum of structural units (A) and (B), wherein the wt.-% is based on the total weight of the polycarbonate cocondensate. Most preferably, the polycarbonate cocondensate essentially consists of or consists of the structural units (A) and (B). It is clear that the term "consists of" in this case excludes the terminal groups which are additionally present.

Preferably, the polycarbonate cocondensate of the present inventions contains at least one, preferably more than one, of the following structures (4x) to (7x): 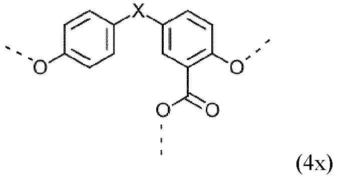 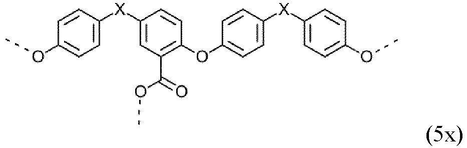 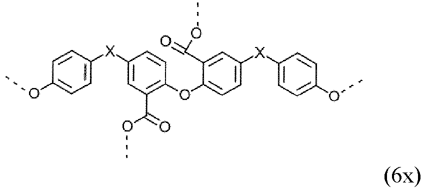 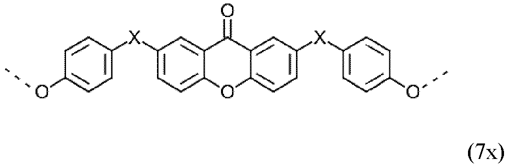 in which the phenyl rings may independently of one another be mono- or disubstituted with C1-C8 alkyl, halogen, preferably C1 to C4 alkyl, particularly preferably with methyl and X represents a single bond, C1 to C6 alkylene, C2 to C5 alkylidene or C5 to C6 cycloalkylidene, preferably a single bond or C1 to C4 alkylene and especially preferably isopropylidene, wherein the amount of structural units (4x) to (7x) in total (determined after hydrolysis) is generally in the range from 50 to 1000 ppm, preferably in the range from 80 to 850 ppm. The presence of these structures can have a positive impact on the properties of the resulting polycarbonate cocondensate.

In order to determine the amount of at least one of the structures (4x) to (7x) the respective polycarbonate cocondensate is subjected to a total hydrolysis to form the corresponding degradation products of formulae (4y) to (7y), the amount of which is determined by HPLC (this may be accomplished for example as follows: The polycarbonate cocondensate sample is hydrolysed under reflux by means of sodium methoxide. The corresponding solution is acidified and concentrated to dryness. The drying residue is dissolved in acetonitrile and the phenolic compounds of the formula (1y) to (4y) are determined by means of HPLC with UV detection):

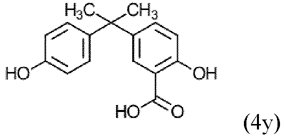

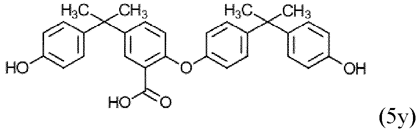

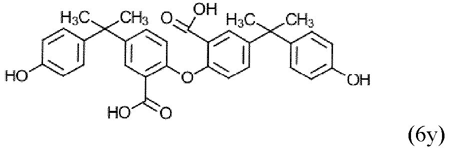

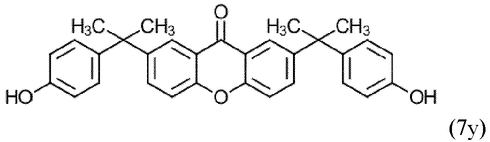

The amount of the thus-liberated compound of formula (4y) is preferably 20 to 800 ppm, particularly preferably 25 to 700 ppm and especially preferably 30 to 500 ppm.

The amount of the thus-liberated compound of formula (5y) is preferably 0 (i.e. below the detection limit of 10 ppm) to 100 ppm, particularly preferably 0 to 80 ppm and especially preferably 0 to 50 ppm.

The amount of the thus-liberated compound of formula (6y) is preferably 0 (i.e. below the detection limit of 10 ppm) to 800 ppm, more preferably 10 to 700 ppm, particularly preferably 20 to 600 ppm and very particularly preferably 30 to 350 ppm.

The amount of the thus-liberated compound of formula (7y) is preferably 0 (i.e. below the detection limit of 10 ppm) to 300 ppm, preferably 5 to 250 ppm and especially preferably 10 to 200 ppm.

Most preferably, structures (4x) to (7x) are introduced into the polycarbonate cocondensate of the present invention by the use of a homopolycarbonate comprising structural units (B) and at least one of the structures (4x) to (7x).

In a further aspect of the present invention a molding compound comprising the polycarbonate cocondensate of the present invention in each definition as given above is provided. By addition of further thermoplastic polymers and/or additive such molding compounds can be obtained. Furthermore, another aspect of the present invention provides a molded article comprising the polycarbonate cocondensate of the present invention in each definition as given above. Such molded articles can be obtained by process known to the skilled person such as extrusion, injection molding, blow molding or thermoforming of sheets or plates.

In another aspect of the present invention a process is provided which results in a polycarbonate cocondensate having a high molecular weight and which can comprise even high amounts of structural units (A) as defined above. Preferably, the process of the present invention results in the polycarbonate cocondensate of the present invention in each definition as given above. This means that especially the molecular weight of the polycarbonate cocondensate as defined above can be obtained by the process of the present invention.

Accordingly, a process for preparing a polycarbonate cocondensate, preferably polycarbonate block cocondensate characterized in that at least one diol of formula (1) 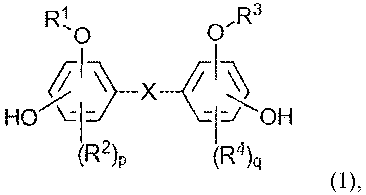 wherein
each X in structural unit (A) independently represents a single bond, -O-, -S-, -S(O)-, -S(O)₂-, -C(O)-, or an organic group having 1 to 18 carbon atoms, wherein the organic group having 1 to 18 carbon atoms can be linear, branched or cyclic, aromatic or non-aromatic, and can further comprise heteroatoms such as halogens, oxygen, nitrogen, sulfur, silicon or phosphorous,
each of R¹ and R³ independently represents a monovalent hydrocarbon group, preferably C₁-C₂₆-alkyl, C₇-C₂₆ alkylaryl or C₇-C₂₆-aralkyl,
each of R² and R⁴ independently represents a hydrogen atom, an alkoxy group, or a monovalent hydrocarbon group, preferably a hydrogen atom, C₁-C₆-alkoxy or C₁-C₆-alkyl, and
each of p and q independently is 1 or 2, preferably 1,
is reacted with at least one homopolycarbonate, and
at least one diaryl carbonate of formula (2) 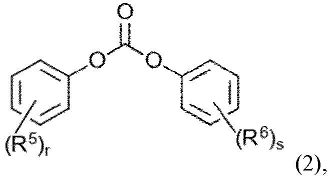
wherein each R⁵ and R⁶ independently represents H**,** C₁-C₃₄-alkyl, C₇-C₃₄-aralkyl, C₆-C₃₄-aryl or -COO-R', wherein R' represents C₁-C₃₄-alkyl, C₇-C₃₄-aralkyl or C₆-C₃₄-aryl and
each of r and s represents 1 to 5,
wherein the molar ratio of the at least one diol of formula (1) to the homopolycarbonate is from 20:80 to 95:5.

Preferably, with respect to the diol of formula (1)
each X independently represents a substituted or unsubstituted C₃-C₁₈-cycloalkylidene; a C₁-C₁₈-alkylidene of the formula -C(R^{c})(R^{d})- wherein R^{c} and R^{d} are each independently hydrogen, C₁-C₁₂-alkyl, C₁-C₁₂-cycloalkyl, C₇-C₁₂-arylalkyl, C₁-C₁₂-heteroalkyl, or cyclic C₇-C₁₂-heteroarylalkyl; or a group of the formula -C(=R^{c})- wherein R^{c} is a divalent C₁ -C₁₂-hydrocarbon group,
each of R¹ and R³ independently represents C₁-C₂₆-alkyl, C₇-C₂₆ alkylaryl or C₇-C₂₆-aralkyl,
each of R² and R⁴ independently represents a hydrogen atom, C₁-C₆-alkoxy or C₁-C₆-alkyl, and each of p and q independently is 1.

Preferably, the process of the present invention is characterized in that the diol of formula (1) is represented by the following formula (1a): 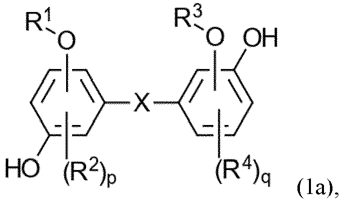 wherein X, R¹, R², R³, R⁴, p, q and n have the meaning as given with respect to formula (1).

Preferably, X in formula (1) or (1a) can be a substituted or unsubstituted C₃-C₁₈-cycloalkylidene; a C₁-C₁₈-alkylidene of the formula -C(R^{c})(R^{d})- wherein R^{c} and R^{d} are each independently hydrogen, C₁-C₁₂-alkyl, C₁-C₁₂-cycloalkyl, C₇-C₁₂-arylalkyl, C₁-C₁₂-heteroalkyl, or cyclic C₇-C₁₂-heteroarylalkyl; or a group of the formula -C(=R^{c})- wherein R^{c} is a divalent C₁ -C₁₂-hydrocarbon group. Still preferably, each of R¹ and R³ independently represents C₁-C₂₆-alkyl, C₇-C₂₆ alkylaryl or C₇-C₂₆-aralkyl. Even more preferably each of R¹ and R³ independently represents methyl, ethyl, propyl, octyl, isooctyl, benzyl, ethylphenyl, butylphenyl, propyldiphenyl, or cyclohexylphenyl. Most preferably, each of R¹ and R³ is methyl.

Preferably, X in formula (1) or (1a) represents methylene, cyclohexyl-methylene, 2-[2.2.1]-bicycloheptylidene, ethylidene, isopropylidene, neopentylidene, cyclohexylidene, cyclopentadecylidene, cyclododecylidene, or adamantylidene. Still preferably, X represents a C₁-C₁₈-alkylidene of the formula -C(R^{c})(R^{d})- wherein R^{c} and R^{d} are each independently hydrogen, C₁-C₁₂-alkyl, C₁-C₁₂-cycloalkyl, C₇-C₁₂-arylalkyl, C₁-C₁₂-heteroalkyl, or cyclic C₇-C₁₂-heteroarylalkyl, preferably hydrogen or C₁-C₁₂-alkyl. Still more preferably, R^{c} and R^{d} are each independently hydrogen or C₁-C₆ alkyl. Most preferably, R^{c} is hydrogen and R^{d} is methyl, ethyl, propyl or butyl. At the same time, most preferably each of R¹ and R³ is methyl.

Preferably, each of R² and R⁴ in formula (1) or (1a) independently represents a hydrogen atom, an alkoxy group, or a monovalent hydrocarbon group, preferably a hydrogen atom, C₁-C₆-alkoxy or C₁-C₆-alkyl, even more preferably a hydrogen atom or C₁-C₄-alkyl.

Preferably each of p and q in formula (1) or (1a) is 1. In this case it is most preferred that R² and R⁴ are both C₁-C₄-alkyl.

Preferably, each X in formula (1) or (1a) independently represents a C₁-C₆-alkylidene of the formula -C(R^{c})(R^{d})- wherein R^{c} and R^{d} are each independently hydrogen or C₁-C₅-alkyl.

Still preferably, in formula (1) or (1a) each X independently represents a C₁-C₄-alkylidene of the formula -C(R^{c})(R^{d})- wherein R^{c} and R^{d} are each independently hydrogen or C₁-C₃-alkyl, preferably hydrogen
each of R¹ and R³ independently represents methyl or ethyl,
each of R² and R⁴ independently represents a hydrogen atom, methyl, ethyl or propyl.

Preferably in the process of the present invention no diol of formula (101) is used

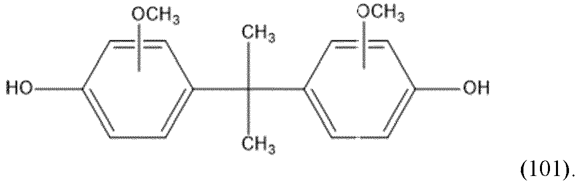

This preferably does not exclude that the structural unit of formula (101) might be present in the used diols in trace amounts. Preferably, the amount of the diol of formula (101) in the at least one diol of formula (1) which is used according to the present invention is less than 30 wt.-%, still preferably less than 20 wt.-%, most preferably less than 10 wt.%, wherein the wt.-% is based on the total weight of all diols as used.

Preferably, the homopolycarbonate has a relative solution viscosity eta rel of 1,08 to 1,22, more preferably 1,11 to 1,22 and most preferably 1,13 to 1,20. According to the present invention, the relative solution viscosity (rel; also referred to as eta rel) is preferably determined in dichloromethane at a concentration of 5 g/l at 25 °C using an Ubbelohde viscometer. The determination of the relative solution viscosity by means of an Ubbelohde viscometer is known to the skilled person. According to the invention, this is preferably carried out in accordance with DIN 51562-3; 1985-05. In this process, the flow times of the respective polymer to be measured are measured through the Ubbelohde viscometer in order to subsequently determine the difference in viscosity between the polymer solution and its solvent. For this purpose, the Ubbelohde viscometer is first calibrated by measuring the pure solvent dichloromethane (always at least 3 measurements, at most 9 measurements). This is followed by the actual calibration with the solvent dichloromethane. The polymer sample is then weighed, dissolved in dichloromethane and the flow time is determined three times for this solution. The mean value of the flow times is corrected via the Hagenbach correction and the relative solution viscosity is calculated.

Preferably, the homopolycarbonate which is used in the process of the present invention comprises structural unit (B) in each definition and preference as given above. This preferably means that that the homopolycarbonate used in the process of the present invention comprises structural units (B) 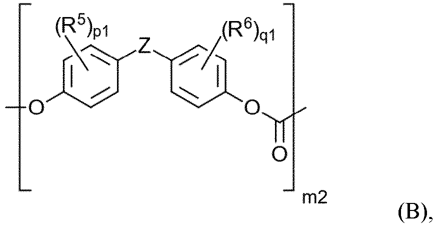
wherein each Z in structural unit (B) independently represents a single bond, -S(=O)₂-, - C(=O)-, -O-, -S-, -S(=O)-, -CH(CN)-, linear or branched C₁-C₆-alkylene which optionally comprises at least one carbonyl-group, optionally comprises at least one halogen atom and/or optionally is interrupted by at least one heteroatom, C₂-C₁₀-alkylidene which optionally comprises at least one carbon-carbon-double bond, optionally comprises at least one carbonyl-group and/or optionally comprises at least one halogen atom, C₅-C₁₂-cycloalkylene, wherein the cycloaliphatic group is fused to at least one further cycloaliphatic ring, C₅-C₁₅-cycloalkylidene wherein the cycloaliphatic group is optionally fused to at least one cycloaliphatic and /or at least one aromatic ring, C₇-C₂₀-aralkylidene, C₈-C₂₀-aralkylene, C₆-C₁₂-arylene optionally being fused to further aromatic rings which optionally may comprise at least one hetero atom, formula (B1-A), formula (B1-B), formula (B1-C) or formula (B1-D) 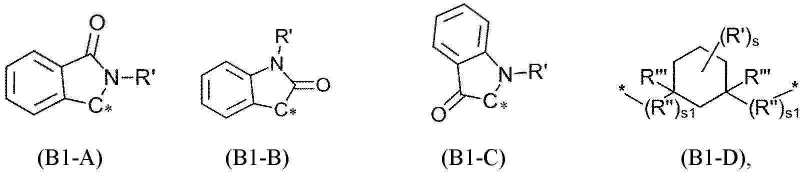
wherein in formulae (B1-A), (B1-B) and (B1-C) each R' independently represents a linear C₁-C₄-alkyl, branched C₃-C₄-alkyl, aralkyl or aryl and the "C*" indicates the quaternary carbon atom which is at the position indicated as "Z" in formula (B), and
wherein in formula (B1-D) each R' independently represents a linear C₁-C₄-alkyl, branched C₃-C₄-alkyl, each R" independently represents a linear C₁-C₄-alkylene, branched C₃-C₄-alkylene, each R‴ independently represents H or linear C₁-C₃-alkyl, s is 0 to 2 and each s1 independently is 0 or 1, and the "*" indicate the bonds which link "Z" to the aromatic rings in formula (B),
each R⁵ and R⁶ independently represents H, C₁-C₁₈-alkyl, C₅-C₆-cycloalkyl, C₁-C₅-alkenyl-, C₁-C₁₈-alkoxy, phenoxy, halogen atom, C₆-C₁₈-aryl or C₇-C₁₈-aralkyl,
each of p1 and q1 is 1 to 4 and
m2 represents the average number of repeating units, and m is 7 to 31.

All other preferences as given with respect to formula (B) above are also applicable for the process of the present invention.

Most preferably the process of the present invention is characterized in that the homopolycarbonate comprises structural units of formula (Ba) 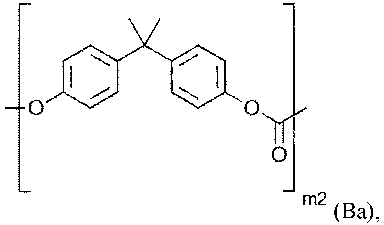 wherein m2 represents the average number of repeating units and is 7 to 31.

Still preferably, the homopolycarbonate which is used in the process of the present invention has a terminal OH-group content of 250 ppm to 2500 ppm, still preferably 500 ppm to 2400 ppm and most preferably 1000 to 2300 ppm. This content of terminal OH groups is preferably determined by infrared spectroscopy. It can also be determined by ¹H-NMR. If determined by IR spectroscopy, the homopolycarbonate is preferably dissolved in dichloromethane (2 g / 50 ml) and determined by evaluating the band at a wave number of 3583 cm⁻¹. The calibration of the infrared instrument required for this is known to the skilled person.

The homopolycarbonate can be obtained as described in WO2019238419A1, DE10119851A1, WO02077066A1, WO02077067A2 or WO02085967A1.

In the process of the present invention, a diaryl carbonate of formula (2) is used. Preferably, in formula (2) each R⁵ and R⁶ independently represents H, C₁-C₁₀-alkyl, C₇-C₁₅-aralkyl, C₆-C₁₂-aryl or -COO-R', wherein R' represents C₁-C₅-alkyl, C₇-C₁₂-aralkyl or C₆-C₁₂-aryl and each of r and s represents 1 to 3. More preferably, the diaryl carbonate of formula (2) is selected from the group consisting of diphenylcarbonate, 4-tert-butylphenyl-phenyl-carbonate, di-(4-tert-butylphenyl)-carbonate, biphenyl-4-yl-phenyl-carbonate, di-(biphenyl-4-yl)-carbonate, 4-(1-methyl-1 -phenylethyl)-phenyl-phenyl-carbonate and di-[4-(1 -methyl-1 -phenylethyl)-phenyl]-carbonate.

Preferably, in the process of the present invention the molar ratio of the diaryl carbonate of formula (2) to the sum of the diol of formula (1) and the homopolycarbonate is 1.01 to 1.09, preferably 1.03 to 1.07.

The process according to the present invention can be performed using techniques known to the skilled person. In principal, the process can be conducted in an interphase phosgenation or a melt process. Preferably, the process of the present invention is characterized in that the reaction is performed in the melt. This preferably means that the process is conducted at temperatures which are above the melting / glass transition temperatures of all educts and products. The skilled person knows how to conduct the process in the melt (so called melt transesterification). The preparation of specific cocondensates via melt transesterification is often more economically favorable than via interphase phosgenation, because of the smaller quantity of these specialties. In addition, educts that require special handling such as phosgene can be avoided. Finally, a polymerization via the melt transesterification does not require the use of a solvent and thus, needs less purifying of the resulting product.

In the melt transesterification the reactants are preferably melted under reduced pressure. According to the plant construction, during the melting phase, atmospheric pressure, preferably gentle vacuum, i.e. absolute pressures of lower than 200 mbar, especially preferably 100-200 mbar and most preferably less than 100 mbar can be applied. However, the reactants can also be melted under standard pressure, preferably under protective gas atmosphere, for example nitrogen. The melting is preferably effected at a temperature in the range from 175 to 400°C, more preferably in the range from 180 to 350°C, most preferably in the range from 185 to 320°C. For the reaction or condensation phase, the temperatures and pressures mentioned above apply. Preferably, the values as given above are valid for a BPA based homopolycarbonate. However, the skilled person is able to adapt the respective parameters depending on the melting temperature of the homopolycarbonate which is used.

In accordance with the invention, both process steps (i) and (ii) or (ii') are preferably carried out in the absence of an additional organic solvent. The process according to the invention, therefore, may preferably be carried out without solvent. This does not according to the invention exclude the possibility that both the diaryl carbonate used and the condensation product formed in the reactions may be present as solvent in these reaction steps (where possible). This is the case in particular if the carbonate is used in a stoichiometric excess with respect to the diol and the homopolycarbonate. This preferred method variant is particularly gentle. However, according to the invention it is preferred that no additional organic solvent is added to the process. As a result of the absence of an additional organic solvent, the process can be conducted favourably and in an environmentally friendly manner.

The diol of formula (1) and the homopolycarbonate may be reacted according to the process of the present invention using catalysts. A reaction mode without a catalyst is possible in principle but higher temperatures and longer residence times may have to be accepted as a result.

Catalysts suitable for the process according to the invention are for example
ammonium catalysts such as for example tetramethylammonium hydroxide, tetramethylammonium acetate, tetramethylammonium fluoride, tetramethylammonium tetraphenylboranate, dimethyldiphenylammonium hydroxide, tetraethylammonium hydroxide, cetyltrimethylammonium tetraphenylboranate and cetyltrimethylammonium phenoxide. Especially suitable are phosphonium catalysts of formula (K): 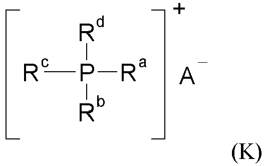
wherein R^{a}, R^{b}, R^{c} and R^{d} may be identical or different C1-C10-alkyls, C6-C14-aryls, C7-C15-arylalkyls or C5-C6-cycloalkyls, preferably methyl or C6-C14-aryls, particularly preferably methyl or phenyl, and X- may be an anion such as hydroxide, sulfate, hydrogensulfate, hydrogencarbonate, carbonate or a halide, preferably chloride or an alkylate or arylate of formula -OR, wherein R may be C6-C14-aryl, C7-C15-arylalkyl or C5-C6-cycloalkyl, preferably phenyl.

Particularly preferred catalysts are tetraphenylphosphonium hydroxide and tetraphenylphosphonium phenoxide, where tetraphenylphosphonium phenoxide is very particularly preferred. It is particularly preferable to employ the alkali metal salts or alkaline earth metal salts of these ammonium and/or phosphonium catalysts.

The catalyst is preferably employed in amounts of 1 to 10⁻⁸ mol, preferably of 10⁻⁸ to 10⁻³ mol, particularly preferably in amounts of 10⁻⁷ to 10⁻⁴ based on 1 mol of the sum of the diol of formula (1) and the homopolycarbonate.

Catalysts suitable for the process according to the invention are those recited hereinabove which are introduced into the reaction either by means of a masterbatch with a suitable homopolycarbonate, in particular the homopolycarbonate according to the invention described hereinabove, or may be introduced separately therefrom or in addition. The catalysts may be employed alone or in admixture and be added in pure form or as a solution, for example in water or in phenol.

The homopolycarbonates can be modified in a controlled manner by the use of small amounts of chain terminators and/or branching agents. Suitable chain terminators and branching agents are known from the literature. Some are described, for example, in DE A 38 33 953. Preferably used chain terminators are phenol or alkylphenols, in particular phenol, para-tert-butyl-phenol, isooctylphenol, cumylphenol, the chlorocarbonic acid esters thereof or acid chlorides of monocarboxylic acids or mixtures of these chain terminators. Preferred chain terminators are phenol, cumylphenol, isooctylphenol, para-tert-butylphenol, and in particular phenol. Examples of compounds suitable as branching agents are aromatic or aliphatic compounds having at least three, preferably three or four, hydroxyl groups. Particularly suitable examples having three or more than three phenolic hydroxyl groups are phloroglucinol, 4,6-dimethyl-2,4,6-tri(4-hydroxyphenyl)hept-2-ene, 4,6-dimethyl-2,4,6-tri(4-hydroxyphenyl)heptane, 1,3,5-tri(4-hydroxyphenyl)benzene, 1,1,1-tri(4-hydroxyphenyl)ethane, tri(4-hydroxyphenyl)-phenylmethane, 2,2-bis(4,4-bis(4-hydroxyphenyl)cyclohexyl]propane, 2,4-bis(4-hydroxyphenylisopropyl)phenol, tetra(4-hydroxyphenyl)methane. Examples of other trifunctional compounds suitable as branching agents are 2,4-dihydroxybenzoic acid, trimesic acid, cyanuric chloride and 3,3-bis(3-methyl-4-hydroxyphenyl)-2-oxo-2,3-dihydroindole. Particularly preferred branching agents are 3,3-bis(3-methyl-4-hydroxyphenyl)-2-oxo-2,3-dihydroindole and 1,1,1-tri(4-hydroxyphenyl)ethane.

The reaction of the inventive process is effected under the above-specified temperatures and pressures. Preference is given to shearing the reaction mixture. This can be done by rapid stirring in a tank or by means of appropriate mixing elements such as static mixers, mixing elements on an extruder screw etc. Higher mixing is preferable over low mixing.

In the process of the present invention the molar ratio of the at least one diol of formula (1) to the homopolycarbonate is from 20:80 to 95:5, preferably from 25:75 to 93:7, more preferably from 30:70 to 92:8, still more preferably from 35:65 to 91:9, and most preferably from 39:61 to 90:10. The skilled person knows how to determine this molar ratio. In particular, for calculating this ratio the number average molecular weight of the homopolycarbonate is used.

In another aspect of the present invention a use of a homopolycarbonate comprising structural units (B) is provided for preparing a polycarbonate cocondensate comprising structural units (A) 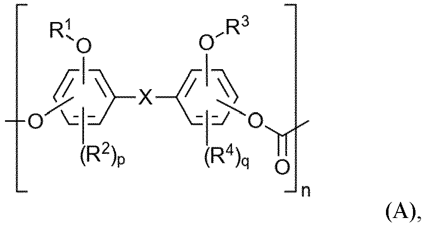 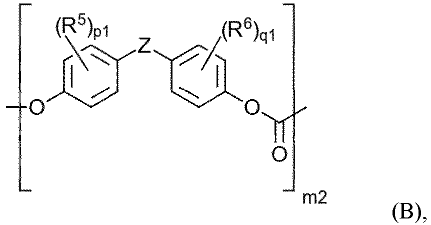 wherein
each X in structural unit (A) independently represents a single bond, -O-, -S-, -S(O)-, -S(O)₂-, -C(O)-, or an organic group having 1 to 18 carbon atoms, wherein the organic group having 1 to 18 carbon atoms can be linear, branched or cyclic, aromatic or non-aromatic, and can further comprise heteroatoms such as halogens, oxygen, nitrogen, sulfur, silicon or phosphorous,
each of R¹ and R³ independently represents a monovalent hydrocarbon group, preferably C₁-C₂₆-alkyl, C₇-C₂₆ alkylaryl or C₇-C₂₆-aralkyl,
each of R² and R⁴ independently represents a hydrogen atom, an alkoxy group, or a monovalent hydrocarbon group, preferably a hydrogen atom, C₁-C₆-alkoxy or C₁-C₆-alkyl, and

each of p and q independently is 1 or 2, preferably 1 and
n represents the average number of repeating units, wherein n is 1 to 10, preferably 1 to 6 and more preferably 1 to 4,
   wherein each Z in structural unit (B) independently represents a single bond, -S(=O)₂-,-C(=O)-, -O-, -S-, -S(=O)-, -CH(CN)-, linear or branched C₁-C₆-alkylene which optionally comprises at least one carbonyl-group, optionally comprises at least one halogen atom and/or optionally is interrupted by at least one heteroatom, C₂-C₁₀-alkylidene which optionally comprises at least one carbon-carbon-double bond, optionally comprises at least one carbonyl-group and/or optionally comprises at least one halogen atom, C₅-C₁₂-cycloalkylene, wherein the cycloaliphatic group is fused to at least one further cycloaliphatic ring, C₅-C₁₅-cycloalkylidene wherein the cycloaliphatic group is optionally fused to at least one cycloaliphatic and /or at least one aromatic ring, C₇-C₂₀-aralkylidene, C₈-C₂₀-aralkylene, C₆-C₁₂-arylene optionally being fused to further aromatic rings which optionally may comprise at least one hetero atom, formula (B1-A), formula (B1-B), formula (B1-C) or formula (B1-D) 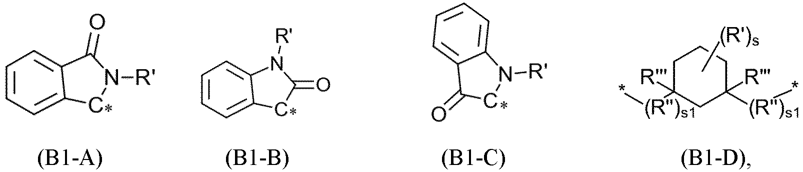
   wherein in formulae (B1-A), (B1-B) and (B1-C) each R' independently represents a linear C₁-C₄-alkyl, branched C₃-C₄-alkyl, aralkyl or aryl and the "C*" indicates the quaternary carbon atom which is at the position indicated as "Z" in formula (B), and wherein in formula (B1-D) each R' independently represents a linear C₁-C₄-alkyl, branched C₃-C₄-alkyl, each R" independently represents a linear C₁-C₄-alkylene, branched C₃-C₄-alkylene, each R‴ independently represents H or linear C₁-C₃-alkyl, s is 0 to 2 and each s1 independently is 0 or 1, and the "*" indicate the bonds which link "Z" to the aromatic rings in formula (B),
   each R⁵ and R⁶ independently represents H, C₁-C₁₈-alkyl, C₅-C₆-cycloalkyl, C₁-C₅-alkenyl-, C₁-C₁₈-alkoxy, phenoxy, halogen atom, C₆-C₁₈-aryl or C₇-C₁₈-aralkyl,
   each of p1 and q1 is 1 to 4 and
   m2 represents the average number of repeating units, and m2 is 7 to 31,
wherein the molar ratio of structural unit (A) to structural unit (B) in the polycarbonate cocondensate is from 20:80 to 95:5. It is understood that this use preferably results in the polycarbonate cocondensate of the present invention as described in detail and preference above.

### Examples

Size exclusion chromatography was performed using a PSS SECcurity System; polycarbonate calibration (according to 2301-0257502-09D method of company Currenta GmbH & Co. OHG, Leverkusen), dichloromethane as eluent, column 1 (PL-PC5) with a concentration of 2 g/l, flow rate 1.0 ml/min, at a temperature of 30°C using UV and/or RI detection.

The glass transition temperature (Tg) was determined by DSC using ISO 11357-2:2013-05 at a heating rate of 10°C/min. The Tg is the onset temperature on second heating at 10°C/min measured on a Mettler Toledo DSC.

The relative solution viscosity relative solution viscosity (also referred to as eta rel) was determined in dichloromethane at a concentration of 5 g/l at 25 °C using an Ubbelohde viscometer. The determination was carried out in accordance with DIN 51562-3; 1985-05. In this process, the flow times of the polycarbonates to be measured was measured through the Ubbelohde viscometer in order to subsequently determine the viscosity difference between the polymer solution and its solvent. For this purpose firstly the Ubbelohde viscometer is calibrated by measuring the pure solvent dichloromethane (at least 3 measurements, at most 9 measurements). This was followed by the actual calibration with the solvent dichloromethane. The polymer sample was then weighed, dissolved in dichloromethane and then the flow time was determined three times. The mean value of the flow times was corrected using the Hagenbach correction and the relative solution viscosity was calculated.

For the determination of OH-groups, the polycarbonate was dissolved in dichloromethane (2g /50 mL; 1mm quartz cuvette) and analyzed with the FT-infrared spectrometer Nicolet iS20 of Thermo Fisher Scientific. The content of phenolic OH groups was determined by the analysis of the band at 3583 cm⁻¹.

### Comparative examples - copolymerization of BPL and BPA

The copolycarbonates were prepared by transesterification of diphenyl carbonate.

Comparative example 3: 0.5623 g of diphenyl carbonate, 0.34 g of BPA and 0.3164 g of BPL1 (4,4'-propylidenebis(2-methoxyphenol) were molten in an alkali-free glass test tube together with 2.8 µl tetraphenylphosphonium phenolate solution (5 wt.-% TPPP, 5 wt.-% demineralized water and 90 wt.-% phenol), and subjected to a batch transesterification under mechanical stirring (stirrer: home-made in form of a drill). The temperature was increased using a thermoblock and the vacuum was improved stepwise as follows:

| | |
|---|---|
| 1. step (45 minutes): | 210 °C, atmospheric pressure |
| 2. step (15 minutes): | 240 °C, 100 mbar absolute pressure |
| 3. step (10 minutes): | 270 °C, 50 mbar absolute pressure |
| 4. step (10 minutes): | 280 °C, 25 mbar absolute pressure |
| 5. step (20 minutes): | 300 °C, 4 mbar absolute pressure |
| 6. step (30 minutes): | 300 °C at <1 mbar absolute pressure |

The results of this polymerization are summarized in Table 1. Comparative examples 1, 2 and 4 were conducted in the same way except that the ratio of BPA and BPL1 were varied as indicated in Table 1.

**Table 1:**

| | Molar ratio of BPA/BPL1 | M_{w} (g/mol) | Tg (°C) |
|---|---|---|---|
| Comparative example 1 | 100/0 | 31,087 | - |
| Comparative example 2 | 90/10 | 33,720 | 141.1 |
| Comparative example 3 | 60/40 | 17,980 | 125.9 |
| Comparative example 4 | 30/70 | 11,230 | 113.9 |

| | | | |
|---|---|---|---|
| *) A small amount of phenol is always present due to the addition of the catalyst in a phenol-containing solution. | | | |

As can be seen from the results of table 1 the reaction of monomeric BPL and monomeric BPA leads to copolymers. However, with increasing amounts of BPL the overall molecular weight of the resulting copolymer gets smaller. This means that not all ratios of BPL and BPA can be freely chosen in order to fine-tune properties of the copolymer and obtaining a reasonable molecular weight for all applications. Especially cocondensates having high amounts of BPL and having a high molecular weight cannot easily be obtained when using monomeric BPA.

### Inventive examples - copolymerization of BPL2 and homopolycarbonate based on BPA

Inventive example 2: 0.0487 g of diphenyl carbonate, 0.86g homopolycarbonate (homoPC) and 0.0298 g of BPL2 (5,5'-methylenebis(4-n-propylguaiacol) were molten in an alkali-free glass flask together with 3.3 µl tetraphenylphosphonium phenolate solution (5 wt.-% TPPP, 5 wt.-% demineralized water and 90 wt.-% phenol), and subjected to a batch transesterification under mechanical stirring. The homopolycarbonate (homoPC) was a linear bisphenol A based polycarbonate comprising terminal OH groups and phenyl groups and having a relative solution viscosity of 1.16 (corresponding to a number average molecular weight of 6629 g/mol). The preparation of this homoPC is described in WO02085967A1. The content of terminal OH groups was 0.16 %.

The temperature was increased and the vacuum was improved stepwise as follows:

| | |
|---|---|
| 1. step (45 minutes): | 210 °C, atmospheric pressure |
| 2. step (5 minutes): | 240 °C, 100 mbar absolute pressure |
| 3. step (5minutes): | 270 °C, 50 mbar absolute pressure |
| 4. step (5 minutes): | 280 °C, 25 mbar absolute pressure |
| 5. step (20 minutes): | 300 °C, 4 mbar absolute pressure |
| 6. step (30 minutes): | 300 °C at <1 mbar absolute pressure |

The reaction time was reduced in order to obtain molecular weights that are comparable to those which can be obtained in theory for a BPA homopolycarbonate (cf. comparative example 1).

The results of this polymerization are summarized in Table 2. Inventive examples 1 and 3 were conducted in the same way except that the ratio of homoPC and BPL2 were varied as indicated in Table 2.

### OH

**Table 2:**

| | Molar ratio of homoPC/BPL2 | M_{w} (g/mol) | Tg (°C) |
|---|---|---|---|
| Inventive example 1 | 90/10 | 9,178 | 132.8 |
| Inventive example 2 | 60/40 | 18,560 | 140.8 |
| Inventive example 3 | 30/70 | 24,010 | 138.5 |

| | | | |
|---|---|---|---|
| ^{*)} A small amount of phenol is always present due to the addition of the catalyst in a phenol-containing solution. | | | |

Table 2 shows that when using a BPA based polycarbonate instead of monomeric BPA for the copolymerization with BPL, reasonable molecular weights can be obtained when at least 20 mol-% of the BPL monomer is used (using 80 mol-% of "BPA" in the form of a BPA based polycarbonate). It can be concluded from the experiments that high molecular weights can be obtained even for high contents of BPL in the cocondensate.

## Claims

1. A polycarbonate cocondensate comprising at least one structural unit (A) and at least one structural unit (B) 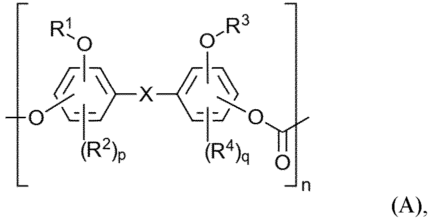 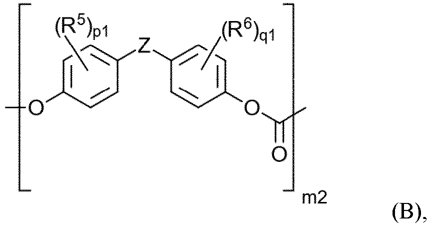 wherein
each X in structural unit (A) independently represents a single bond, -O-, -S-, -S(O)-, -S(O)₂-, -C(O)-, or an organic group having 1 to 18 carbon atoms, wherein the organic group having 1 to 18 carbon atoms can be linear, branched or cyclic, aromatic or non-aromatic, and can further comprise heteroatoms such as halogens, oxygen, nitrogen, sulfur, silicon or phosphorous,
each of R¹ and R³ independently represents a monovalent hydrocarbon group, preferably C₁-C₂₆-alkyl, C₇-C₂₆ alkylaryl or C₇-C₂₆-aralkyl,
each of R² and R⁴ independently represents a hydrogen atom, an alkoxy group, or a monovalent hydrocarbon group, preferably a hydrogen atom, C₁-C₆-alkoxy or C₁-C₆-alkyl, and
each of p and q independently is 1 or 2, preferably 1 and
n represents the average number of repeating units, wherein n is 1 to 10, preferably 1 to 6 and more preferably 1 to 4,
wherein each Z in structural unit (B) independently represents a single bond, -S(=O)₂-, - C(=O)-, -O-, -S-, -S(=O)-, -CH(CN)-, linear or branched C₁-C₆-alkylene which optionally comprises at least one carbonyl-group, optionally comprises at least one halogen atom and/or optionally is interrupted by at least one heteroatom, C₂-C₁₀-alkylidene which optionally comprises at least one carbon-carbon-double bond, optionally comprises at least one carbonyl-group and/or optionally comprises at least one halogen atom, C₅-C₁₂-cycloalkylene, wherein the cycloaliphatic group is fused to at least one further cycloaliphatic ring, C₅-C₁₅-cycloalkylidene wherein the cycloaliphatic group is optionally fused to at least one cycloaliphatic and /or at least one aromatic ring, C₇-C₂₀-aralkylidene, C₈-C₂₀-aralkylene, C₆-C₁₂-arylene optionally being fused to further aromatic rings which optionally may comprise at least one hetero atom, formula (B1-A), formula (B1-B), formula (B1-C) or formula (B1-D) 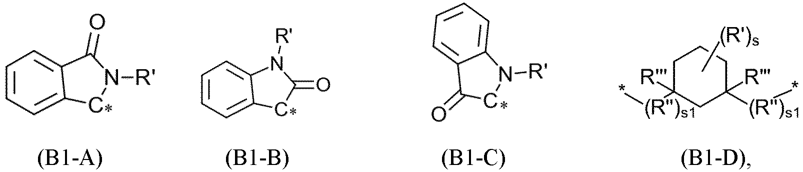
wherein in formulae (B1-A), (B1-B) and (B1-C) each R' independently represents a linear C₁-C₄-alkyl, branched C₃-C₄-alkyl, aralkyl or aryl and the "C*" indicates the quaternary carbon atom which is at the position indicated as "Z" in formula (B), and
wherein in formula (B1-D) each R' independently represents a linear C₁-C₄-alkyl, branched C₃-C₄-alkyl, each R" independently represents a linear C₁-C₄-alkylene, branched C₃-C₄-alkylene, each R‴ independently represents H or linear C₁-C₃-alkyl, s is 0 to 2 and each s1 independently is 0 or 1, and the "*" indicate the bonds which link "Z" to the aromatic rings in formula (B),
each R⁵ and R⁶ independently represents H, C₁-C₁₈-alkyl, C₅-C₆-cycloalkyl, C₁-C₅-alkenyl-, C₁-C₁₈-alkoxy, phenoxy, halogen atom, C₆-C₁₈-aryl or C₇-C₁₈-aralkyl,
each of p1 and q1 is 1 to 4 and
m2 represents the average number of repeating units, and m2 is 7 to 31
wherein the molar ratio of structural unit (A) to structural unit (B) is from 20:80 to 95:5
and the polycarbonate cocondensate has a weight average molecular weight of 15 000 g/mol to 50 000 g/mol as determined by GPC in dichloromethane using a BPA-based polycarbonate calibration.

2. The polycarbonate cocondensate of claim 1, **characterized in that** each X in structural unit (A) independently represents a substituted or unsubstituted C₃-C₁₈-cycloalkylidene; a C₁-C₁₈-alkylidene of the formula -C(R^{c})(R^{d})- wherein R^{c} and R^{d} are each independently hydrogen, C₁-C₁₂-alkyl, C₁-C₁₂-cycloalkyl, C₇-C₁₂-arylalkyl, C₁-C₁₂-heteroalkyl, or cyclic C₇-C₁₂-heteroarylalkyl; or a group of the formula -C(=R^{c})- wherein R^{c} is a divalent C₁ -C₁₂-hydrocarbon group,
each of R¹ and R³ independently represents C₁-C₂₆-alkyl, C₇-C₂₆ alkylaryl or C₇-C₂₆-aralkyl,
each of R² and R⁴ independently represents a hydrogen atom, C₁-C₆-alkoxy or C₁-C₆-alkyl, and
each of p and q independently is 1 and
n represents the average number of repeating units.

3. The polycarbonate cocondensate of claim 1, **characterized in that** structural unit (A) is represented by the following structural unit (Aa): 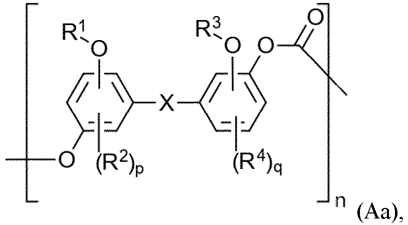 wherein X, R¹, R², R³, R⁴, p, q and n have the meaning as given in claim 1 or 2 with respect to structural unit (A).

4. The polycarbonate cocondensate according to anyone of claims 1 to 3, **characterized in that** in structural unit (A) in claim 1 or structural unit (Aa) in claim 3,
each X independently represents a C₁-C₆-alkylidene of the formula -C(R^{c})(R^{d})-wherein R^{c} and R^{d} are each independently hydrogen or C₁-C₅-alkyl.

5. The polycarbonate cocondensate according to anyone of claims 1 to 4, **characterized in that** in structural unit (A) in claim 1 or structural unit (Aa) in claim 3,
each X independently represents a C₁-C₄-alkylidene of the formula -C(R^{c})(R^{d})-wherein R^{c} and R^{d} are each independently hydrogen or C₁-C₃-alkyl, preferably hydrogen each of R¹ and R³ independently represents methyl or ethyl,
each of R² and R⁴ independently represents a hydrogen atom, methyl, ethyl or propyl.

6. The polycarbonate cocondensate according to anyone of claims 1 to 5, **characterized in that** structural unit (B) is represented by the following structural unit (Ba) 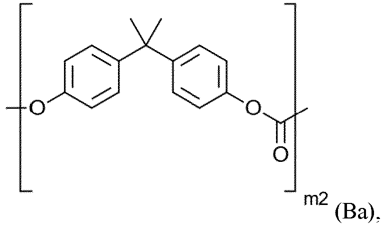 wherein m2 represents the average number of repeating units and is 7 to 31.

7. A molding compound comprising the polycarbonate cocondensate of anyone of claims 1 to 6.

8. A molded article comprising the polycarbonate cocondensate of anyone of claims 1 to 6.

9. A process for preparing a polycarbonate cocondensate **characterized in that** at least one diol of formula (1) 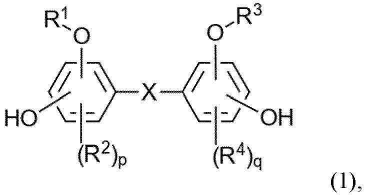 wherein
each X in structural unit (A) independently represents a single bond, -O-, -S-, -S(O)-, -S(O)₂-, -C(O)-, or an organic group having 1 to 18 carbon atoms, wherein the organic group having 1 to 18 carbon atoms can be linear, branched or cyclic, aromatic or non-aromatic, and can further comprise heteroatoms such as halogens, oxygen, nitrogen, sulfur, silicon or phosphorous,
each of R¹ and R³ independently represents a monovalent hydrocarbon group, preferably C₁-C₂₆-alkyl, C₇-C₂₆ alkylaryl or C₇-C₂₆-aralkyl,
each of R² and R⁴ independently represents a hydrogen atom, an alkoxy group, or a monovalent hydrocarbon group, preferably a hydrogen atom, C₁-C₆-alkoxy or C₁-C₆-alkyl, and
each of p and q independently is 1 or 2, preferably 1,
is reacted with at least one homopolycarbonate and
at least one diaryl carbonate of formula (2) 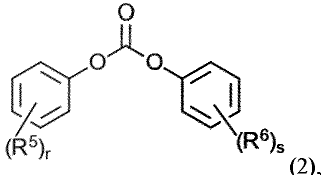
wherein each R⁵ and R⁶ independently represents H, C₁-C₃₄-alkyl, C₇-C₃₄-aralkyl, C₆-C₃₄-aryl or -COO-R', wherein R' represents C₁-C₃₄-alkyl, C₇-C₃₄-aralkyl or C₆-C₃₄-aryl and
each of r and s represents 1 to 5,
wherein the molar ratio of the at least one diol of formula (1) to the homopolycarbonate is from 20:80 to 95:5.

10. The process according to claim 9, **characterized in that** the homopolycarbonate has a relative solution viscosity eta rel of 1,08 to 1,22, determined in dichloromethane at a concentration of 5 g/l at 25°C using a Ubbelohde viscometer in accordance with DIN 51562-3; 1985-05.

11. The process according to claim 9 or 10, **characterized in that** the reaction is performed in the melt.

12. The process according to anyone of claims 9 to 11, **characterized in that** the homopolycarbonate comprises structural units (B) 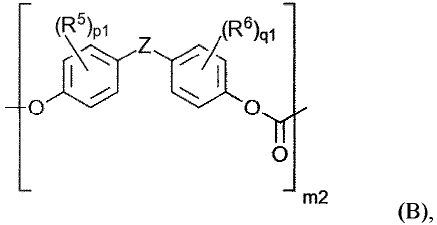
wherein each Z in structural unit (B) independently represents a single bond, -S(=O)₂-, - C(=O)-, -O-, -S-, -S(=O)-, -CH(CN)-, linear or branched C₁-C₆-alkylene which optionally comprises at least one carbonyl-group, optionally comprises at least one halogen atom and/or optionally is interrupted by at least one heteroatom, C₂-C₁₀-alkylidene which optionally comprises at least one carbon-carbon-double bond, optionally comprises at least one carbonyl-group and/or optionally comprises at least one halogen atom, C₅-C₁₂-cycloalkylene, wherein the cycloaliphatic group is fused to at least one further cycloaliphatic ring, C₅-C₁₅-cycloalkylidene wherein the cycloaliphatic group is optionally fused to at least one cycloaliphatic and /or at least one aromatic ring, C₇-C₂₀-aralkylidene, C₈-C₂₀-aralkylene, C₆-C₁₂-arylene optionally being fused to further aromatic rings which optionally may comprise at least one hetero atom, formula (B1-A), formula (B1-B), formula (B1-C) or formula (B1-D) 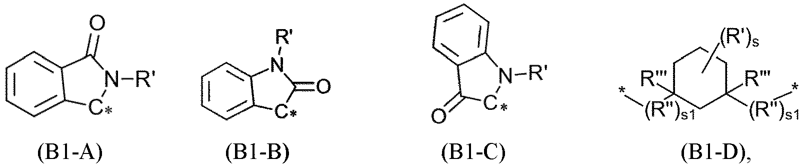
wherein in formulae (B1-A), (B1-B) and (B1-C) each R' independently represents a linear C₁-C₄-alkyl, branched C₃-C₄-alkyl, aralkyl or aryl and the "C*" indicates the quaternary carbon atom which is at the position indicated as "Z" in formula (B), and
wherein in formula (B1-D) each R' independently represents a linear C₁-C₄-alkyl, branched C₃-C₄-alkyl, each R" independently represents a linear C₁-C₄-alkylene, branched C₃-C₄-alkylene, each R‴ independently represents H or linear C₁-C₃-alkyl, s is 0 to 2 and each s1 independently is 0 or 1, and the "*" indicate the bonds which link "Z" to the aromatic rings in formula (B),
each R⁵ and R⁶ independently represents H, C₁-C₁₈-alkyl, C₅-C₆-cycloalkyl, C₁-C₅-alkenyl-, C₁-C₁₈-alkoxy, phenoxy, halogen atom, C₆-C₁₈-aryl or C₇-C₁₈-aralkyl, each of p1 and q1 is 1 to 4 and
m2 represents the average number of repeating units, and m is 7 to 31.

13. The process according to anyone of claims 9 to 12, **characterized in that** the hompolycarbonate has a terminal OH-group content of 250 ppm to 2500 ppm, determined as indicated in the description.

14. The process according to anyone of claims 9 to 13, **characterized in that** the homopolycarbonate comprises structural units of formula (Ba) 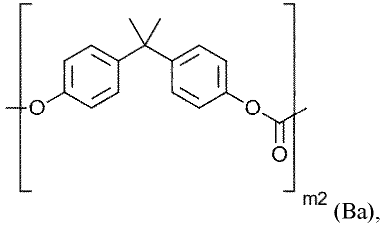 wherein m2 represents the average number of repeating units and is 7 to 31.

15. The use of a hompolycarbonate comprising structural units (B) for preparing a polycarbonate cocondensate comprising structural units (A) 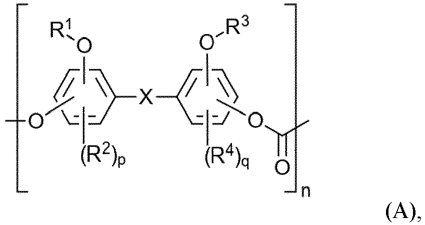 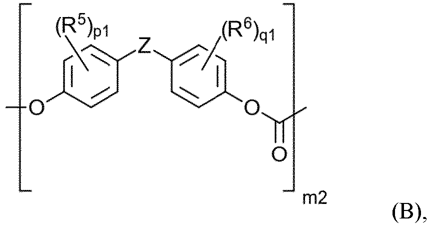 wherein
each X in structural unit (A) independently represents a single bond, -O-, -S-, -S(O)-, -S(O)₂-, -C(O)-, or an organic group having 1 to 18 carbon atoms, wherein the organic group having 1 to 18 carbon atoms can be linear, branched or cyclic, aromatic or non-aromatic, and can further comprise heteroatoms such as halogens, oxygen, nitrogen, sulfur, silicon or phosphorous,
each of R¹ and R³ independently represents a monovalent hydrocarbon group, preferably C₁-C₂₆-alkyl, C₇-C₂₆ alkylaryl or C₇-C₂₆-aralkyl,
each of R² and R⁴ independently represents a hydrogen atom, an alkoxy group, or a monovalent hydrocarbon group, preferably a hydrogen atom, C₁-C₆-alkoxy or C₁-C₆-alkyl, and
each of p and q independently is 1 or 2, preferably 1 and
n represents the average number of repeating units, wherein n is 1 to 10, preferably 1 to 6 and more preferably 1 to 4,
wherein each Z in structural unit (B) independently represents a single bond, -S(=O)₂-, - C(=O)-, -O-, -S-, -S(=O)-, -CH(CN)-, linear or branched C₁-C₆-alkylene which optionally comprises at least one carbonyl-group, optionally comprises at least one halogen atom and/or optionally is interrupted by at least one heteroatom, C₂-C₁₀-alkylidene which optionally comprises at least one carbon-carbon-double bond, optionally comprises at least one carbonyl-group and/or optionally comprises at least one halogen atom, C₅-C₁₂-cycloalkylene, wherein the cycloaliphatic group is fused to at least one further cycloaliphatic ring, C₅-C₁₅-cycloalkylidene wherein the cycloaliphatic group is optionally fused to at least one cycloaliphatic and /or at least one aromatic ring, C₇-C₂₀-aralkylidene, C₈-C₂₀-aralkylene, C₆-C₁₂-arylene optionally being fused to further aromatic rings which optionally may comprise at least one hetero atom, formula (B1-A), formula (B1-B), formula (B1-C) or formula (B1-D) 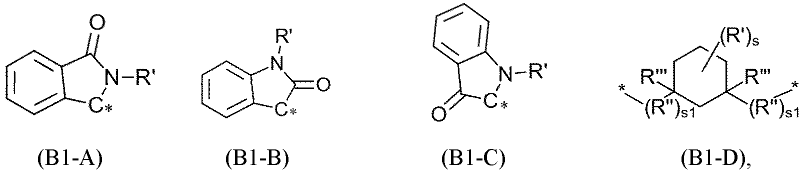
wherein in formulae (B1-A), (B1-B) and (B1-C) each R' independently represents a linear C₁-C₄-alkyl, branched C₃-C₄-alkyl, aralkyl or aryl and the "C*" indicates the quaternary carbon atom which is at the position indicated as "Z" in formula (B), and
wherein in formula (B1-D) each R' independently represents a linear C₁-C₄-alkyl, branched C₃-C₄-alkyl, each R" independently represents a linear C₁-C₄-alkylene, branched C₃-C₄-alkylene, each R‴ independently represents H or linear C₁-C₃-alkyl, s is 0 to 2 and each s1 independently is 0 or 1, and the "*" indicate the bonds which link "Z" to the aromatic rings in formula (B),
each R⁵ and R⁶ independently represents H, C₁-C₁₈-alkyl, C₅-C₆-cycloalkyl, C₁-C₅-alkenyl-, C₁-C₁₈-alkoxy, phenoxy, halogen atom, C₆-C₁₈-aryl or C₇-C₁₈-aralkyl,
each of p1 and q1 is 1 to 4 and
m2 represents the average number of repeating units, and m2 is 7 to 31,wherein the molar ratio of structural unit (A) to structural unit (B) in the polycarbonate cocondensate is from 20:80 to 95:5.

## Patentansprüche

1. Polycarbonatcokondensat, umfassend mindestens eine Struktureinheit (A) und mindestens eine Struktureinheit (B) 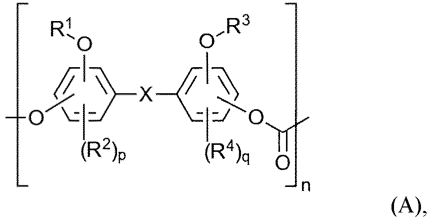 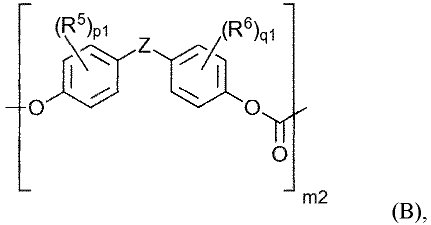 wobei
X in Struktureinheit (A) jeweils unabhängig für eine Einfachbindung, -O-, -S-, -S(O)-, -S(O)₂-, -C(O)- oder eine organische Gruppe mit 1 bis 18 Kohlenstoffatomen steht, wobei die organische Gruppe mit 1 bis 18 Kohlenstoffatomen linear, verzweigt oder cyclisch, aromatisch oder nichtaromatisch sein kann und ferner Heteroatome wie Halogene, Sauerstoff, Stickstoff, Schwefel, Silicium oder Phosphor umfassen kann,
R¹ und R³ jeweils unabhängig für eine einwertige Kohlenwasserstoffgruppe, vorzugsweise C₁-C₂₆-Alkyl, C₇-C₂₆-Alkylaryl oder C₇-C₂₆-Aralkyl, stehen,
R² und R⁴ jeweils unabhängig für ein Wasserstoffatom, eine Alkoxygruppe oder eine einwertige Kohlenwasserstoffgruppe, vorzugsweise ein Wasserstoffatom, C₁-C₆-Alkoxy oder C₁-C₆-Alkyl, stehen und p und q jeweils unabhängig 1 oder 2, vorzugsweise 1, sind, und
n für die durchschnittliche Zahl von Wiederholungseinheiten steht, wobei n 1 bis 10, vorzugsweise 1 bis 6 und weiter bevorzugt 1 bis 4 ist,
wobei Z in Struktureinheit (B) jeweils unabhängig für eine Einfachbindung, -S(=O)₂-, -C(=O)-, -O-, -S-, -S(=O)-, -CH(CN)-, lineares oder verzweigtes C₁-C₆-Alkylen, das gegebenenfalls mindestens eine Carbonylgruppe umfasst, gegebenenfalls mindestens ein Halogenatom umfasst und/oder gegebenenfalls durch mindestens ein Heteroatom unterbrochen ist, C₂-C₁₀-Alkyliden, das gegebenenfalls mindestens eine Kohlenstoff-Kohlenstoff-Doppelbindung umfasst, gegebenenfalls mindestens eine Carbonylgruppe umfasst und/oder gegebenenfalls mindestens ein Halogenatom umfasst, C₅-C₁₂-Cycloalkylen, wobei die cycloaliphatische Gruppe an mindestens einen weiteren cycloaliphatischen Ring ankondensiert ist, C₅-C₁₅-Cycloalkyliden, wobei die cycloaliphatische Gruppe gegebenenfalls an mindestens einen cycloaliphatischen und/oder mindestens einen aromatischen Ring ankondensiert ist, C₇-C₂₀-Aralkyliden, C₈-C₂₀-Aralkylen, C₆-C₁₂-Arylen, das gegebenenfalls an weitere aromatische Ringe, die gegebenenfalls mindestens ein Heteroatom umfassen können, ankondensiert ist, Formel (B1-A), Formel (B1-B), Formel (B1-C) oder Formel (B1-D) steht, 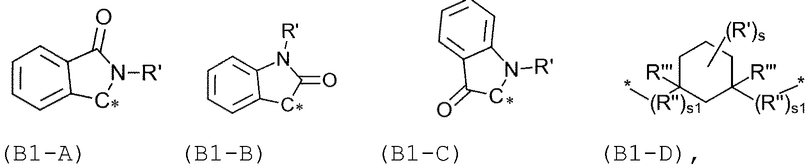
wobei in den Formeln (B1-A), (B1-B) und (B1-C) R' jeweils unabhängig für ein lineares C₁-C₄-Alkyl, verzweigtes C₃-C₄-Alkyl, Aralkyl oder Aryl steht und das "C*" das quartäre Kohlenstoffatom anzeigt, das sich in der in Formel (B) als "Z" angegebenen Position befindet, und wobei in Formel (B1-D) R' jeweils unabhängig für ein lineares C₁-C₄-Alkyl oder verzweigtes C₃-C₄-Alkyl steht, R" jeweils unabhängig für ein lineares C₁-C₄-Alkylen oder verzweigtes C₃-C₄-Alkylen steht, R‴ jeweils unabhängig für H oder lineares C₁-C₃-Alkyl steht, s 0 bis 2 ist und s1 jeweils unabhängig 0 oder 1 ist und "*" die Bindungen anzeigt, die "Z" mit den aromatischen Ringen in Formel (B) verknüpfen,
R⁵ und R⁶ jeweils unabhängig für H, C₁-C₁₈-Alkyl, C₅-C₆-Cycloalkyl, C₁-C₅-Alkenyl-, C₁-C₁₈-Alkoxy, Phenoxy, Halogenatom, C₆-C₁₈-Aryl oder C₇-C₁₈-Aralkyl stehen, p1 und q1 jeweils 1 bis 4 sind und
m2 für die durchschnittliche Zahl von Wiederholungseinheiten steht und m2 7 bis 31 ist,
wobei das Molverhältnis von Struktureinheit (A) zu Struktureinheit (B) 20:80 bis 95:5 beträgt
und das Polycarbonatcokondensat ein durch GPC in Dichlormethan unter Verwendung einer Kalibrierung mit Polycarbonat auf BPA-Basis bestimmtes gewichtsmittleres Molekulargewicht von 15.000 g/mol bis 50.000 g/mol aufweist.

2. Polycarbonatcokondensat nach Anspruch 1, **dadurch gekennzeichnet, dass** jedes X in Struktureinheit (A) jeweils unabhängig für ein substituiertes oder unsubstituiertes C₃-C₁₈-Cycloalkyliden, ein C₁-C₁₈-Alkyliden der Formel -C(R^{c})(R^{d})-, wobei R^{c} und R^{d} jeweils unabhängig Wasserstoff, C₁-C₁₂-Alkyl, C₁-C₁₂-Cycloalkyl, C-₇-C₁₂-Arylalkyl, C₁-C₁₂-Heteroalkyl oder cyclisches C₇-C₁₂-Heteroarylalkyl sind, oder eine Gruppe der Formel - C(=R^{c})-, wobei R^{c} eine zweiwertige C₁-C₁₂-Kohlenwasserstoffgruppe ist, steht,
R¹ und R³ jeweils unabhängig für C₁-C₂₆-Alkyl, C₇-C₂₆-Alkylaryl oder C₇-C₂₆-Aralkyl stehen,
R² und R⁴ jeweils unabhängig für ein Wasserstoffatom, C₁-C₆-Alkoxy oder C₁-C₆-Alkyl stehen und
p und q jeweils unabhängig 1 sind und
n für die durchschnittliche Zahl von Wiederholungseinheiten steht.

3. Polycarbonatcokondensat nach Anspruch 1, **dadurch gekennzeichnet, dass** die Struktureinheit (A) durch die folgende Struktureinheit (Aa) wiedergegeben wird: 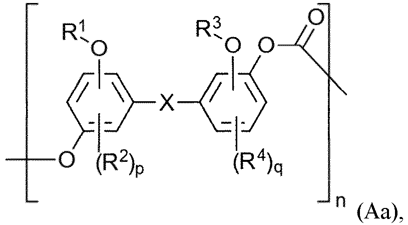 wobei X, R¹, R², R³, R⁴, p, q und n die in Anspruch 1 oder 2 bezüglich der Struktureinheit (A) angegebene Bedeutung haben.

4. Polycarbonatcokondensat nach einem der Ansprüche 1 bis 3, **dadurch gekennzeichnet, dass** in der Struktureinheit (A) in Anspruch 1 oder der Struktureinheit (Aa) in Anspruch 3
X jeweils unabhängig für ein C₁-C₆-Alkyliden der Formel - C(R^{c})(R^{d})-, wobei R^{c} und R^{d} jeweils unabhängig Wasserstoff oder C₁-C₅-Alkyl sind, steht.

5. Polycarbonatcokondensat nach einem der Ansprüche 1 bis 4, **dadurch gekennzeichnet, dass** in der Struktureinheit (A) in Anspruch 1 oder der Struktureinheit (Aa) in Anspruch 3
X jeweils unabhängig für ein C₁-C₄-Alkyliden der Formel - C(R^{c})(R^{d})-, wobei R^{c} und R^{d} jeweils unabhängig Wasserstoff oder C₁-C₃-Alkyl, vorzugsweise Wasserstoff, sind, steht, R¹ und R³ jeweils unabhängig für Methyl oder Ethyl stehen, R² und R⁴ jeweils unabhängig für ein Wasserstoffatom, Methyl, Ethyl oder Propyl stehen.

6. Polycarbonatcokondensat nach einem der Ansprüche 1 bis 5, **dadurch gekennzeichnet, dass** die Struktureinheit (B) durch die folgende Struktureinheit (Ba) wiedergegeben wird 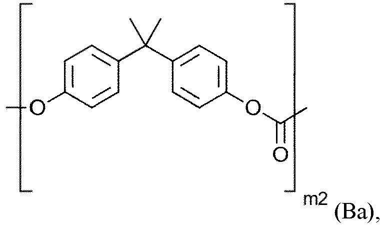 wobei m2 für die durchschnittliche Zahl von Wiederholungseinheiten steht und 7 bis 31 ist.

7. Formmasse, umfassend das Polycarbonatcokondensat nach einem der Ansprüche 1 bis 6.

8. Formkörper, umfassend das Polycarbonatcokondensat nach einem der Ansprüche 1 bis 6.

9. Verfahren zur Herstellung eines Polycarbonatcokondensats, **dadurch gekennzeichnet, dass** man mindestens ein Diol der Formel (1) 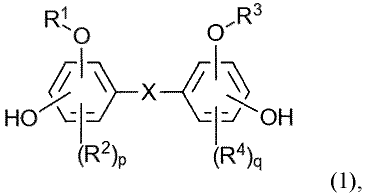 wobei
X in Struktureinheit (A) jeweils unabhängig für eine Einfachbindung, -O-, -S-, -S(O)-, -S(O)₂-, -C(O)- oder eine organische Gruppe mit 1 bis 18 Kohlenstoffatomen steht, wobei die organische Gruppe mit 1 bis 18 Kohlenstoffatomen linear, verzweigt oder cyclisch, aromatisch oder nichtaromatisch sein kann und ferner Heteroatome wie Halogene, Sauerstoff, Stickstoff, Schwefel, Silicium oder Phosphor umfassen kann,
R¹ und R³ jeweils unabhängig für eine einwertige Kohlenwasserstoffgruppe, vorzugsweise C₁-C₂₆-Alkyl, C₇-C₂₆-Alkylaryl oder C₇-C₂₆-Aralkyl, stehen,
R² und R⁴ jeweils unabhängig für ein Wasserstoffatom, eine Alkoxygruppe oder eine einwertige Kohlenwasserstoffgruppe, vorzugsweise ein Wasserstoffatom, C₁-C₆-Alkoxy oder C₁-C₆-Alkyl, stehen und p und q jeweils unabhängig 1 oder 2, vorzugsweise 1, sind,
mit mindestens einem Homopolycarbonat und
mindestens einem Diarylcarbonat der Formel (2) 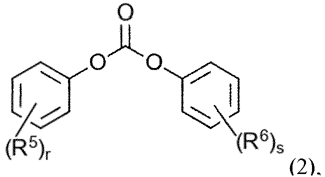
umsetzt, wobei R⁵ und R⁶ jeweils unabhängig für H, C₁-C₃₄-Alkyl, C₇-C₃₄-Aralkyl, C₆-C₃₄-Aryl oder -COO-R' stehen, wobei R' für C₁-C₃₄-Alkyl, C₇-C₃₄-Aralkyl oder C₆-C₃₄-Aryl steht, und
r und s jeweils für 1 bis 5 stehen,
wobei das Molverhältnis des mindestens einen Diols der Formel (1) zu dem Homopolycarbonat 20:80 bis 95:5 beträgt.

10. Verfahren nach Anspruch 9, **dadurch gekennzeichnet, dass** das Homopolycarbonat eine in Dichlormethan bei einer Konzentration von 5 g/l bei 25 °C mit einem Ubbelohde-Viskosimeter nach DIN 51562-3; 1985-05 bestimmte relative Lösungsviskosität eta rel von 1,08 bis 1,22 aufweist.

11. Verfahren nach Anspruch 9 oder 10, **dadurch gekennzeichnet, dass** die Umsetzung in der Schmelze durchgeführt wird.

12. Verfahren nach einem der Ansprüche 9 bis 11, **dadurch gekennzeichnet, dass** das Homopolycarbonat Struktureinheiten (B) umfasst 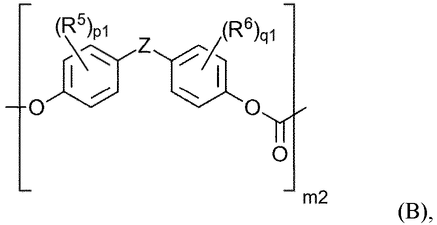
wobei Z in Struktureinheit (B) jeweils unabhängig für eine Einfachbindung, -S(=O)₂-, -C(=O)-, -O-, -S-, -S(=O)-, -CH(CN)-, lineares oder verzweigtes C₁-C₆-Alkylen, das gegebenenfalls mindestens eine Carbonylgruppe umfasst, gegebenenfalls mindestens ein Halogenatom umfasst und/oder gegebenenfalls durch mindestens ein Heteroatom unterbrochen ist, C₂-C₁₀-Alkyliden, das gegebenenfalls mindestens eine Kohlenstoff-Kohlenstoff-Doppelbindung umfasst, gegebenenfalls mindestens eine Carbonylgruppe umfasst und/oder gegebenenfalls mindestens ein Halogenatom umfasst, C₅-C₁₂-Cycloalkylen, wobei die cycloaliphatische Gruppe an mindestens einen weiteren cycloaliphatischen Ring ankondensiert ist, C₅-C₁₅-Cycloalkyliden, wobei die cycloaliphatische Gruppe gegebenenfalls an mindestens einen cycloaliphatischen und/oder mindestens einen aromatischen Ring ankondensiert ist, C₇-C₂₀-Aralkyliden, C₈-C₂₀-Aralkylen, C₆-C₁₂-Arylen, das gegebenenfalls an weitere aromatische Ringe, die gegebenenfalls mindestens ein Heteroatom umfassen können, ankondensiert ist, Formel (B1-A), Formel (B1-B), Formel (B1-C) oder Formel (B1-D) steht, 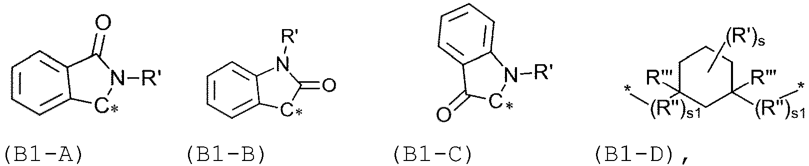
wobei in den Formeln (B1-A), (B1-B) und (B1-C) R' jeweils unabhängig für ein lineares C₁-C₄-Alkyl, verzweigtes C₃-C₄-Alkyl, Aralkyl oder Aryl steht und das "C*" das quartäre Kohlenstoffatom anzeigt, das sich in der in Formel (B) als "Z" angegebenen Position befindet, und wobei in Formel (B1-D) R' jeweils unabhängig für ein lineares C₁-C₄-Alkyl oder verzweigtes C₃-C₄-Alkyl steht, R" jeweils unabhängig für ein lineares C₁-C₄-Alkylen oder verzweigtes C₃-C₄-Alkylen steht, R‴ jeweils unabhängig für H oder lineares C₁-C₃-Alkyl steht, s 0 bis 2 ist und s1 jeweils unabhängig 0 oder 1 ist und "*" die Bindungen anzeigt, die "Z" mit den aromatischen Ringen in Formel (B) verknüpfen,
R⁵ und R⁶ jeweils unabhängig für H, C₁-C₁₈-Alkyl, C₅-C₆-Cycloalkyl, C₁-C₅-Alkenyl-, C₁-C₁₈-Alkoxy, Phenoxy, Halogenatom, C₆-C₁₈-Aryl oder C₇-C₁₈-Aralkyl stehen,
p1 und q1 jeweils 1 bis 4 sind und
m2 für die durchschnittliche Zahl von Wiederholungseinheiten steht und m 7 bis 31 ist.

13. Verfahren nach einem der Ansprüche 9 bis 12, **dadurch gekennzeichnet, dass** das Homopolycarbonat einen wie in der Beschreibung angegeben bestimmten OH-Endgruppengehalt von 250 ppm bis 2500 ppm aufweist.

14. Verfahren nach einem der Ansprüche 9 bis 13, **dadurch gekennzeichnet, dass** das Homopolycarbonat Struktureinheiten der Formel (Ba) umfasst 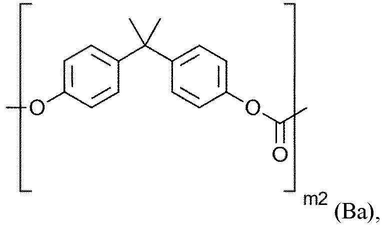 wobei m2 für die durchschnittliche Zahl von Wiederholungseinheiten steht und 7 bis 31 ist.

15. Verwendung eines Homopolycarbonats, das Struktureinheiten (B) umfasst, zur Herstellung eines Polycarbonatcokondensats, das Struktureinheiten (A) umfasst, 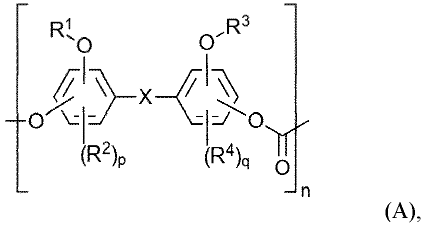 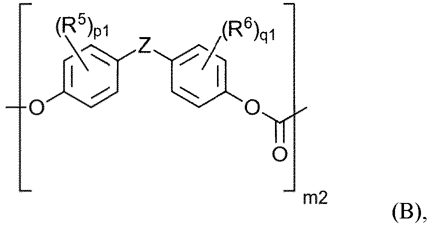 wobei
X in Struktureinheit (A) jeweils unabhängig für eine Einfachbindung, -O-, -S-, -S(O)-, -S(O)₂-, -C(O)- oder eine organische Gruppe mit 1 bis 18 Kohlenstoffatomen steht, wobei die organische Gruppe mit 1 bis 18 Kohlenstoffatomen linear, verzweigt oder cyclisch, aromatisch oder nichtaromatisch sein kann und ferner Heteroatome wie Halogene, Sauerstoff, Stickstoff, Schwefel, Silicium oder Phosphor umfassen kann,
R¹ und R³ jeweils unabhängig für eine einwertige Kohlenwasserstoffgruppe, vorzugsweise C₁-C₂₆-Alkyl, C₇-C₂₆-Alkylaryl oder C₇-C₂₆-Aralkyl, stehen,
R² und R⁴ jeweils unabhängig für ein Wasserstoffatom, eine Alkoxygruppe oder eine einwertige Kohlenwasserstoffgruppe, vorzugsweise ein Wasserstoffatom, C₁-C₆-Alkoxy oder C₁-C₆-Alkyl, stehen und p und q jeweils unabhängig 1 oder 2, vorzugsweise 1, sind, und
n für die durchschnittliche Zahl von Wiederholungseinheiten steht, wobei n 1 bis 10, vorzugsweise 1 bis 6 und weiter bevorzugt 1 bis 4 ist, wobei Z in Struktureinheit (B) jeweils unabhängig für eine Einfachbindung, -S(=O)₂-, -C(=O)-, -O-, -S-, -S(=O)-, -CH(CN)-, lineares oder verzweigtes C₁-C₆-Alkylen, das gegebenenfalls mindestens eine Carbonylgruppe umfasst, gegebenenfalls mindestens ein Halogenatom umfasst und/oder gegebenenfalls durch mindestens ein Heteroatom unterbrochen ist, C₂-C₁₀-Alkyliden, das gegebenenfalls mindestens eine Kohlenstoff-Kohlenstoff-Doppelbindung umfasst, gegebenenfalls mindestens eine Carbonylgruppe umfasst und/oder gegebenenfalls mindestens ein Halogenatom umfasst, C₅-C₁₂-Cycloalkylen, wobei die cycloaliphatische Gruppe an mindestens einen weiteren cycloaliphatischen Ring ankondensiert ist, C₅-C₁₅-Cycloalkyliden, wobei die cycloaliphatische Gruppe gegebenenfalls an mindestens einen cycloaliphatischen und/oder mindestens einen aromatischen Ring ankondensiert ist, C₇-C₂₀-Aralkyliden, C₈-C₂₀-Aralkylen, C₆-C₁₂-Arylen, das gegebenenfalls an weitere aromatische Ringe, die gegebenenfalls mindestens ein Heteroatom umfassen können, ankondensiert ist, Formel (B1-A), Formel (B1-B), Formel (B1-C) oder Formel (B1-D) steht, 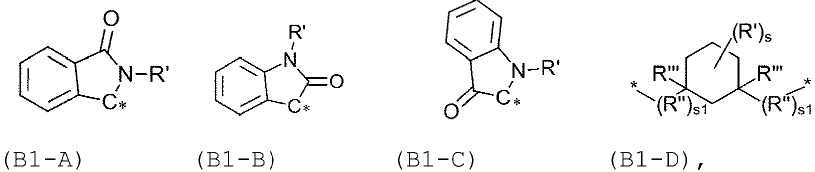
wobei in den Formeln (B1-A), (B1-B) und (B1-C) R' jeweils unabhängig für ein lineares C₁-C₄-Alkyl, verzweigtes C₃-C₄-Alkyl, Aralkyl oder Aryl steht und das "C*" das quartäre Kohlenstoffatom anzeigt, das sich in der in Formel (B) als "Z" angegebenen Position befindet, und wobei in Formel (B1-D) R' jeweils unabhängig für ein lineares C₁-C₄-Alkyl oder verzweigtes C₃-C₄-Alkyl steht, R" jeweils unabhängig für ein lineares C₁-C₄-Alkylen oder verzweigtes C₃-C₄-Alkylen steht, R‴ jeweils unabhängig für H oder lineares C₁-C₃-Alkyl steht, s 0 bis 2 ist und s1 jeweils unabhängig 0 oder 1 ist und "*" die Bindungen anzeigt, die "Z" mit den aromatischen Ringen in Formel (B) verknüpfen,
R⁵ und R⁶ jeweils unabhängig für H, C₁-C₁₈-Alkyl, C₅-C₆-Cycloalkyl, C₁-C₅-Alkenyl-, C₁-C₁₈-Alkoxy, Phenoxy, Halogenatom, C₆-C₁₈-Aryl oder C₇-C₁₈-Aralkyl stehen,
p1 und q1 jeweils 1 bis 4 sind und
m2 für die mittlere Zahl von Wiederholungseinheiten steht und m2 7 bis 31 ist, wobei das Molverhältnis von Struktureinheit (A) zu Struktureinheit (B) in dem Polycarbonatcokondensat 20:80 bis 95:5 beträgt.

## Revendications

1. Co-condensat de polycarbonate comprenant au moins un motif structural (A) et au moins un motif structural (B) 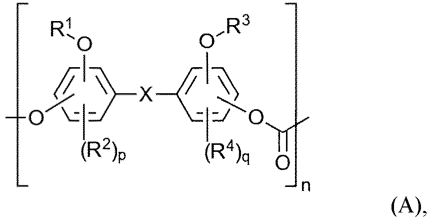 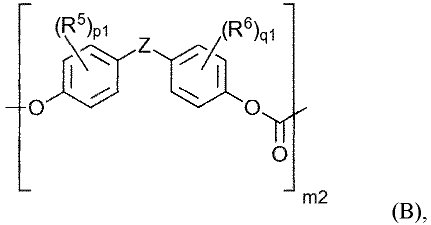 dans lequel
chaque X dans le motif structural (A) représente indépendamment une simple liaison, -O-, -S-, -S(O)-, - S(O)₂-, -C(O)- ou un groupe organique de 1 à 18 atomes de carbone, le groupe organique ayant de 1 à 18 atomes de carbone pouvant être linéaire, ramifié ou cyclique, aromatique ou non aromatique, et pouvant en outre comprendre des hétéroatomes tels que des halogènes, oxygène, azote, soufre, silicium ou phosphore,
chacun de R¹ et R³ représente indépendamment un groupe hydrocarboné monovalent, de préférence C₁-C₂₆-alkyle, C₇-C₂₆ alkylaryle ou C₇-C₂₆-aralkyle,
chacun de R² et R⁴ représente indépendamment un atome d'hydrogène, un groupe alcoxy ou un groupe hydrocarboné monovalent, de préférence un atome d'hydrogène, C₁-C₆-alcoxy ou C₁-C₆-alkyle, et
chacun de p et q est indépendamment 1 ou 2, de préférence 1 et
n représente le nombre moyen de motifs répétitifs, n étant 1 à 10, de préférence 1 à 6 et plus préférablement 1 à 4,
dans lequel chaque Z dans le motif structural (B) représente indépendamment une simple liaison, -S(=O)₂-, -C(=O)-, -O-, -S-, -S(=O)-, -CH(CN)-, C₁-C₆-alkylène linéaire ou ramifié qui comprend éventuellement au moins un groupe carbonyle, comprend éventuellement au moins un atome d'halogène et/ou est éventuellement interrompu par au moins un hétéroatome, C₂-C₁₀-alkylidène qui comprend éventuellement au moins une double liaison carbone-carbone, comprend éventuellement au moins un groupe carbonyle et/ou comprend éventuellement au moins un atome d'halogène, C₃-C₁₂-cycloalkylène, le groupe cycloaliphatique étant condensé à au moins un cycle cycloaliphatique, C₅-C₁₅-cycloalkylidène dans lequel le groupe cycloaliphatique est éventuellement condensé à au moins un cycle cycloaliphatique et/ou à au moins un cycle aromatique, C₇-C₂₀-aralkylidène, C₈-C₂₀-aralkylène, C₆-C₁₂-arylène étant éventuellement condensé à d'autres cycles aromatiques qui peuvent éventuellement comprendre au moins un hétéroatome, formule (B1-A), formule (B1-B), formule (B1-C) ou formule (B1-D) 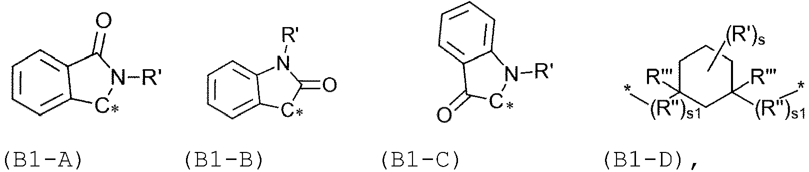
dans lequel, dans les formules (B1-A), (B1-B) et (B1-C) chaque R' représente indépendamment un alkyle en C₁-C₄ linéaire, alkyle, aralkyle ou aryle en C₃-C₄ ramifié et le « C* » indique l'atome de carbone quaternaire qui se trouve à la position indiquée par « Z » dans la formule (B), et
dans lequel, dans la formule (B1-D) chaque R' représente indépendamment un alkyle en C₁-C₄ linéaire, alkyle en C₃-C₄ ramifié, chaque R" représente indépendamment un alkylène en C₁-C₄ linéaire, alkylène en C₃-C₄ ramifié, chaque R‴ représente indépendamment H ou alkyle en C₁-C₃ linéaire, s est 0 à 2 et chaque s1 est indépendamment 0 ou 1, et les « * » indiquent les liaisons qui relient « Z » aux cycles aromatiques dans la formule (B),
chaque R⁵ et R⁶ représente indépendamment H, C₁-C₁₈-alkyle, C₅-C₆-cycloalkyle, C₁-C₅-alcényle-, C₁-C₁₈-alcoxy, phénoxy, atome d'halogène, C₆-C₁₈-aryle ou C₇-C₁₈-aralkyle, chacun de p1 et q1 est 1 à 4 et
m2 représente le nombre moyen de motifs répétitifs, et m2 est 7 à 31
dans lequel le rapport molaire du motif structural (A) sur le motif structural (B) est de 20:80 à 95:5
et le co-condensat de polycarbonate a un poids moléculaire moyen en poids de 15 000 g/mole à 50 000 g/mole, tel que déterminé par GPC dans du dichlorométhane en utilisant un étalonnage de polycarbonate à base de BPA.

2. Co-condensat de polycarbonate selon la revendication 1, **caractérisé en ce que** chaque X dans le motif structural (A) représente indépendamment un cycloalkylidène C₃-C₁₈ substitué ou non substitué ; un alkylidène C₁-C₁₈ de formule -C(R^{c})(R^{d})- dans laquelle R^{c} et R^{d} sont chacun indépendamment hydrogène, C₁-C₁₂-alkyle, C₁-C₁₂-cycloalkyle, C₇-C₁₂-arylalkyle, C₁-C₁₂-hétéroalkyle, ou C₇-C₁₂-hétéroarylalkyle cyclique ; ou un groupe de la formule -C(=R^{c})- dans laquelle R^{c} est un groupe hydrocarboné divalent en C₁-C₁₂,
chacun de R¹ et R³ représente indépendamment C₁-C₂₆-alkyle, C₇-C₂₆-alkylaryle ou C₇-C₂₆-aralkyle,
chacun de R² et R⁴ représente indépendamment un atome d'hydrogène, C₁-C₆-alcoxyle ou C₁-C₆-alkyle, et
chacun de p et q est indépendamment 1 et
n représente le nombre moyen de motifs répétitifs.

3. Co-condensat de polycarbonate selon la revendication 1, **caractérisé en ce que** le motif structural (A) est représenté par le motif structural suivant (Aa) : 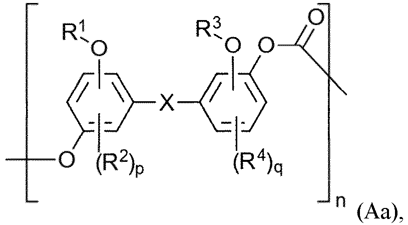 dans lequel X, R¹, R², R³, R⁴, p, q et n ont la signification telle que donnée dans la revendication 1 ou 2 en ce qui concerne le motif structural (A).

4. Co-condensat de polycarbonate selon l'une quelconque des revendications 1 à 3, **caractérisé en ce que** dans le motif structural (A) de la revendication 1 ou le motif structural (Aa) de la revendication 3,
chaque X représente indépendamment un alkylidène en C₁-C₆ de la formule -C(R^{c})(R^{d})- dans laquelle R^{c} et R^{d} sont chacun indépendamment hydrogène ou alkyle en C₁-C₃.

5. Co-condensat de polycarbonate selon l'une quelconque des revendications 1 à 4, **caractérisé en ce que** dans le motif structural (A) de la revendication 1 ou le motif structural (Aa) de la revendication 3,
chaque X représente indépendamment un alkylidène en C₁-C₄ de la formule -C(R^{c})(R^{d})- dans laquelle R^{c} et R^{d} sont chacun indépendamment hydrogène ou alkyle en C₁-C₃, de préférence hydrogène
chacun de R¹ et R³ représente indépendamment méthyle ou éthyle,
chacun de R² et R⁴ représente indépendamment un atome d'hydrogène, méthyle, éthyle ou propyle.

6. Co-condensat de polycarbonate selon l'une quelconque des revendications 1 à 5, **caractérisé en ce que** le motif structural (B) est représenté par le motif structural suivant (Ba) 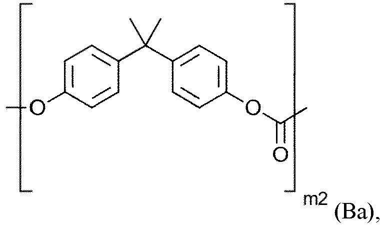 dans lequel m2 représente le nombre moyen de motifs répétitifs et est 7 à 31.

7. Composé de moulage comprenant le co-condensat de polycarbonate selon l'une quelconque des revendications 1 à 6.

8. Article moulé comprenant le co-condensat de polycarbonate selon l'une quelconque des revendications 1 à 6.

9. Procédé de préparation d'un co-condensat de polycarbonate, **caractérisé en ce qu'**au moins un diol de formule (1) 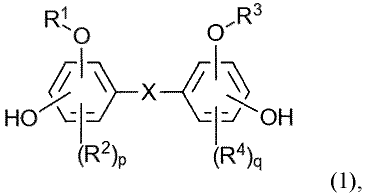 dans lequel
chaque X dans le motif structural (A) représente indépendamment une simple liaison, -O-, -S-, -S(O)-, - S(O)₂-, -C(O)- ou un groupe organique de 1 à 18 atomes de carbone, le groupe organique ayant de 1 à 18 atomes de carbone pouvant être linéaire, ramifié ou cyclique, aromatique ou non aromatique, et pouvant en outre comprendre des hétéroatomes tels que des halogènes, oxygène, azote, soufre, silicium ou phosphore,
chacun de R¹ et R³ représente indépendamment un groupe hydrocarboné monovalent, de préférence C₁-C₂₆-alkyle, C₇-C₂₆ alkylaryle ou C₇-C₂₆-aralkyle,
chacun de R² et R⁴ représente indépendamment un atome d'hydrogène, un groupe alcoxy ou un groupe hydrocarboné monovalent, de préférence un atome d'hydrogène, C₁-C₆-alcoxy ou C₁-C₆-alkyle, et
chacun de p et q est indépendamment 1 ou 2, de préférence 1,
est mis à réagir avec au moins un homopolycarbonate et au moins un carbonate de diaryle de formule (2) 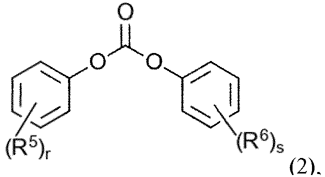
dans laquelle chaque R⁵ et R⁶ représente indépendamment H, alkyle en C₁-C₃₄, aralkyle en C₇-C₃₄, aryle en C₆-C₃₄ ou -COO-R', R' représentant alkyle en C₁-C₃₄, aralkyle en C₇-C₃₄ ou aryle en C₆-C₃₄ et
chacun de r et s représente 1 à 5,
dans lequel le rapport molaire de l'au moins un diol de formule (1) sur l'homopolycarbonate est de 20:80 à 95:5.

10. Procédé selon la revendication 9, **caractérisé en ce que** l'homopolycarbonate présente une viscosité relative en solution eta rel de 1,08 à 1,22, déterminée dans le dichlorométhane à une concentration de 5 g/l à 25 °C en utilisant un viscosimètre Ubbelohde conformément à la norme DIN 51562-3 ; 1985-05.

11. Procédé selon la revendication 9 ou 10, **caractérisé en ce que** la réaction est effectuée dans la masse fondue.

12. Procédé selon l'une quelconque des revendications 9 à 11, **caractérisé en ce que** l'homopolycarbonate comprend des motifs structuraux (B) 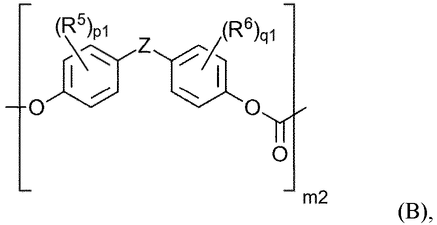
dans lequel chaque Z dans le motif structural (B) représente indépendamment une simple liaison, -S(=O)₂-, -C(=O)-, -O-, -S-, -S(=O)-, -CH(CN)-, C₁-C₆-alkylène linéaire ou ramifié qui comprend éventuellement au moins un groupe carbonyle, comprend éventuellement au moins un atome d'halogène et/ou est éventuellement interrompu par au moins un hétéroatome, C₂-C₁₀-alkylidène qui comprend éventuellement au moins une double liaison carbone-carbone, comprend éventuellement au moins un groupe carbonyle et/ou comprend éventuellement au moins un atome d'halogène, C₃-C₁₂-cycloalkylène, le groupe cycloaliphatique étant condensé à au moins un cycle cycloaliphatique, C₅-C₁₅-cycloalkylidène dans lequel le groupe cycloaliphatique est éventuellement condensé à au moins un cycle cycloaliphatique et/ou à au moins un cycle aromatique, C₇-C₂₀-aralkylidène, C₈-C₂₀-aralkylène, C₆-C₁₂-arylène étant éventuellement condensé à d'autres cycles aromatiques qui peuvent éventuellement comprendre au moins un hétéroatome, formule (B1-A), formule (B1-B), formule (B1-C) ou formule (B1-D) 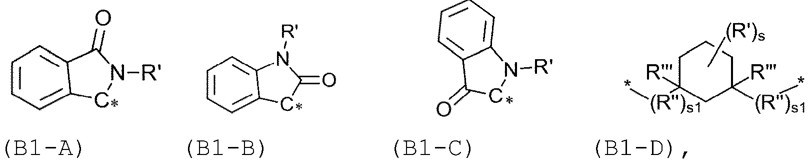
dans lequel, dans les formules (B1-A), (B1-B) et (B1-C) chaque R' représente indépendamment un alkyle en C₁-C₄ linéaire, alkyle, aralkyle ou aryle en C₃-C₄ ramifié et le « C* » indique l'atome de carbone quaternaire qui se trouve à la position indiquée par « Z » dans la formule (B), et
dans lequel, dans la formule (B1-D) chaque R' représente indépendamment un alkyle en C₁-C₄ linéaire, alkyle en C₃-C₄ ramifié, chaque R" représente indépendamment un alkylène en C₁-C₄ linéaire, alkylène en C₃-C₄ ramifié, chaque R‴ représente indépendamment H ou alkyle en C₁-C₃ linéaire, s est 0 à 2 et chaque s1 est indépendamment 0 ou 1, et les « * » indiquent les liaisons qui relient « Z » aux cycles aromatiques dans la formule (B),
chaque R⁵ et R⁶ représente indépendamment H, C₁-C₁₈-alkyle, C₅-C₆-cycloalkyle, C₁-C₅-alcényle-, C₁-C₁₈-alcoxy, phénoxy, atome d'halogène, aryle en C₆-C₁₈ ou aralkyle en C₇-C₁₈,
chacun de p1 et q1 est 1 à 4 et
m2 représente le nombre moyen de motifs répétitifs, et m est 7 à 31.

13. Procédé selon l'une quelconque des revendications 9 à 12, **caractérisé en ce que** l'homopolycarbonate a une teneur en groupes OH terminaux de 250 ppm à 2 500 ppm, déterminée comme indiqué dans la description.

14. Procédé selon l'une quelconque des revendications 9 à 13, **caractérisé en ce que** l'homopolycarbonate comprend des motifs structuraux de formule (Ba) 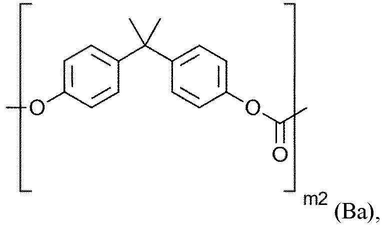 dans lequel m2 représente le nombre moyen de motifs répétitifs et est 7 à 31.

15. Utilisation d'un homopolycarbonate comprenant des motifs structuraux (B) pour la préparation d'un co-condensat de polycarbonate comprenant des motifs structuraux (A) 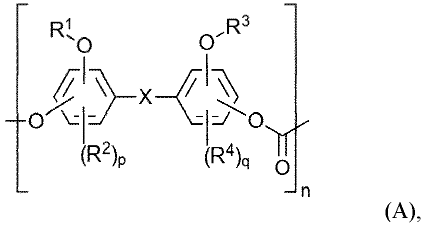 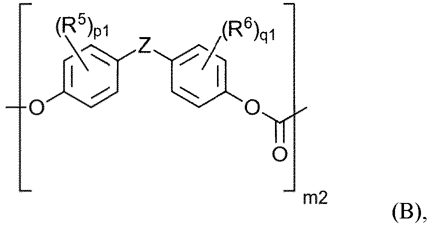 dans laquelle
chaque X dans le motif structural (A) représente indépendamment une simple liaison, -O-, -S-, -S(O)-, - S(O)₂-, -C(O)- ou un groupe organique de 1 à 18 atomes de carbone, le groupe organique ayant de 1 à 18 atomes de carbone pouvant être linéaire, ramifié ou cyclique, aromatique ou non aromatique, et pouvant en outre comprendre des hétéroatomes tels que des halogènes, oxygène, azote, soufre, silicium ou phosphore,
chacun de R¹ et R³ représente indépendamment un groupe hydrocarboné monovalent, de préférence C₁-C₂₆-alkyle, C₇-C₂₆ alkylaryle ou C₇-C₂₆-aralkyle,
chacun de R² et R⁴ représente indépendamment un atome d'hydrogène, un groupe alcoxy ou un groupe hydrocarboné monovalent, de préférence un atome d'hydrogène, C₁-C₆-alcoxy ou C₁-C₆-alkyle, et
chacun de p et q est indépendamment 1 ou 2, de préférence 1 et
n représente le nombre moyen de motifs répétitifs, n étant 1 à 10, de préférence 1 à 6 et plus préférablement 1 à 4,
dans lequel chaque Z dans le motif structural (B) représente indépendamment une simple liaison, -S(=O)₂-, -C(=O)-, -O-, -S-, -S(=O)-, -CH(CN)-, C₁-C₆-alkylène linéaire ou ramifié qui comprend éventuellement au moins un groupe carbonyle, comprend éventuellement au moins un atome d'halogène et/ou est éventuellement interrompu par au moins un hétéroatome, C₂-C₁₀-alkylidène qui comprend éventuellement au moins une double liaison carbone-carbone, comprend éventuellement au moins un groupe carbonyle et/ou comprend éventuellement au moins un atome d'halogène, C₃-C₁₂-cycloalkylène, le groupe cycloaliphatique étant condensé à au moins un cycle cycloaliphatique, C₅-C₁₅-cycloalkylidène dans lequel le groupe cycloaliphatique est éventuellement condensé à au moins un cycle cycloaliphatique et/ou à au moins un cycle aromatique, C₇-C₂₀-aralkylidène, C₈-C₂₀-aralkylène, C₆-C₁₂-arylène étant éventuellement condensé à d'autres cycles aromatiques qui peuvent éventuellement comprendre au moins un hétéroatome, formule (B1-A), formule (B1-B), formule (B1-C) ou formule (B1-D) 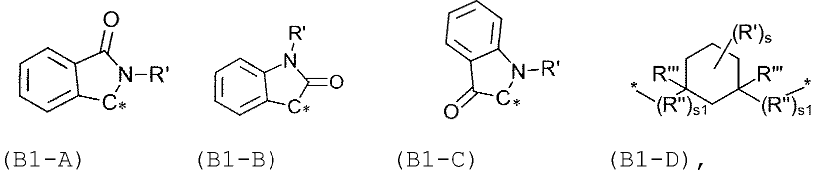
dans lequel, dans les formules (B1-A), (B1-B) et (B1-C) chaque R' représente indépendamment un alkyle en C₁-C₄ linéaire, alkyle, aralkyle ou aryle en C₃-C₄ ramifié et le « C* » indique l'atome de carbone quaternaire qui se trouve à la position indiquée par « Z » dans la formule (B), et
dans lequel, dans la formule (B1-D) chaque R' représente indépendamment un alkyle en C₁-C₄ linéaire, alkyle en C₃-C₄ ramifié, chaque R" représente indépendamment un alkylène en C₁-C₄ linéaire, alkylène en C₃-C₄ ramifié, chaque R‴ représente indépendamment H ou alkyle en C₁-C₃ linéaire, s est 0 à 2 et chaque s1 est indépendamment 0 ou 1, et les « * » indiquent les liaisons qui relient « Z » aux cycles aromatiques dans la formule (B),
chaque R⁵ et R⁶ représente indépendamment H, C₁-C₁₈-alkyle, C₅-C₆-cycloalkyle, C₁-C₅-alcényle-, C₁-C₁₈-alcoxy, phénoxy, atome d'halogène, aryle en C₆-C₁₈ ou aralkyle en C₇-C₁₈,
chacun de p1 et q1 est 1 à 4 et
m2 représente le nombre moyen de motifs répétitifs, et m2 est 7 à 31, le rapport molaire du motif structural (A) sur le motif structural (B) dans le co-condensat de polycarbonate étant de 20:80 à 95:5.
